(19) Europäisches Patentamt
European Patent Office
Office européen des brevets

(11) Publication number: **0 409 194 B1**

(12) # EUROPEAN PATENT SPECIFICATION

(45) Date of publication of patent specification: **18.05.94**

(51) Int. Cl.5: **G02F 1/133**, C08G 73/10, C09K 19/56

(21) Application number: **90113764.6**

(22) Date of filing: **18.07.90**

(54) **Ferroelectric liquid crystal element.**

(30) Priority: **18.07.89 JP 185793/89**
**27.12.89 JP 340470/89**

(43) Date of publication of application:
**23.01.91 Bulletin 91/04**

(45) Publication of the grant of the patent:
**18.05.94 Bulletin 94/20**

(84) Designated Contracting States:
**DE FR GB**

(56) References cited:

**PATENT ABSTRACTS OF JAPAN, vol. 11, no. 170 (P-581), 2nd June 1987; & JP-A-62 000 917**

**PATENT ABSTRACTS OF JAPAN, vol. 9, no. 323 (P-414), 18th December 1985; & JP-A-60 149 026**

**PATENT ABSTRACTS OF JAPAN, vol. 8, no. 275 (P-321), 15th December 1984; & JP-A-59 142 526**

(73) Proprietor: **Showa Shell Sekiyu Kabushiki Kaisha**
**2-5, Kasumigaseki 3-chome**
**Chiyoda-ku**
**Tokyo(JP)**

(72) Inventor: **Negi, Yuvraj Singh, C/o Showa Shell Sekiyu K.K.**
**2-5 Kasumigaseki 3-chome,**
**Chiyoda-ku**
**Tokyo(JP)**
Inventor: **Suzuki, Yoshiichi, C/o Showa Shell Sekiyu K.K.**
**2-5 Kasumigaseki 3-chome,**
**Chiyoda-ku**
**Tokyo(JP)**
Inventor: **Kawamura, Ichiro, C/o Showa Shell Sekiyu K.K.**
**2-5 Kasumigaseki 3-chome,**
**Chiyoda-ku**
**Tokyo(JP)**
Inventor: **Imai, Yoshio**
**9-2-303 Nakamagome 1-chome,**
**Ohta-ku**
**Tokyo(JP)**
Inventor: **Yamamoto, Norio, C/o Nippondenso Co., Ltd.**
**1, Showa-cho 1-chome**
**Kariya-shi, Aichi(JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 409 194 B1

Inventor: **Yamada, Yuichiro, C/o Nippondenso Co., Ltd.**
**1, Showa-cho 1-chome**
**Kariya-shi, Aichi(JP)**
Inventor: **Mori, Kahoru, C/o Nippondenso Co., Ltd.**
**1, Showa-cho 1-chome**
**Kariya-shi, Aichi(JP)**
Inventor: **Nakamura, Koji, C/o Nippondenso Co., Ltd.**
**1, Showa-cho 1-chome**
**Kariya-shi, Aichi(JP)**

(74) Representative: **Hansen, Bernd, Dr. Dipl.-Chem. et al**
**Hoffmann, Eitle & Partner**
**Patent- und Rechtsanwälte,**
**Postfach 81 04 20**
**D-81904 München (DE)**

## Description

### FIELD OF THE INVENTION

This invention relates to a ferroelectric liquid crystal element suitable for use in liquid crystal displays, liquid crystal optical shutters, etc. More particularly, it relates to a composition of an orientation control film which controls the initial orientation state of ferroelectric liquid crystal molecules.

### BACKGROUND OF THE INVENTION

In the art of liquid crystal elements, a TN (twisted nematic) mode has been widely employed (reference can be made in M. Schadt and W. Herfirch, Applied Physics Letters, Vol. 18, No. 4, pp. 127 to 128 (1971)). TN mode liquid crystal elements comprise a pair of transparent electrode substrates between which nematic liquid crystals are sealed, in which the liquid crystal molecules are aligned at an angle of twist of 90°, and the twisted structure is lost on application of an electric field to thereby transmit or shut out light to make a light/shade display.

However, when a TN mode liquid crystal element is applied to a liquid crystal display having matrix electrode patterns in which a group of scanning electrode bands and a group of signal electrodes are arrayed at right angles, there has been a disadvantage that a high pixel density cannot be obtained due to a low rate of response (long switching time), insufficient nonlinearity of voltage-transmission characteristics, and the like. The range of application of TN mode displays has thus been considerably limited.

Under such circumstances, liquid crystals exhibiting ferroelectric properties, synthesized by Meyer, et al., are attracting attention (reference can be made in Le Journal de Physique, Vol. 36, pp. 69 to 71 (Mar., 1975)).

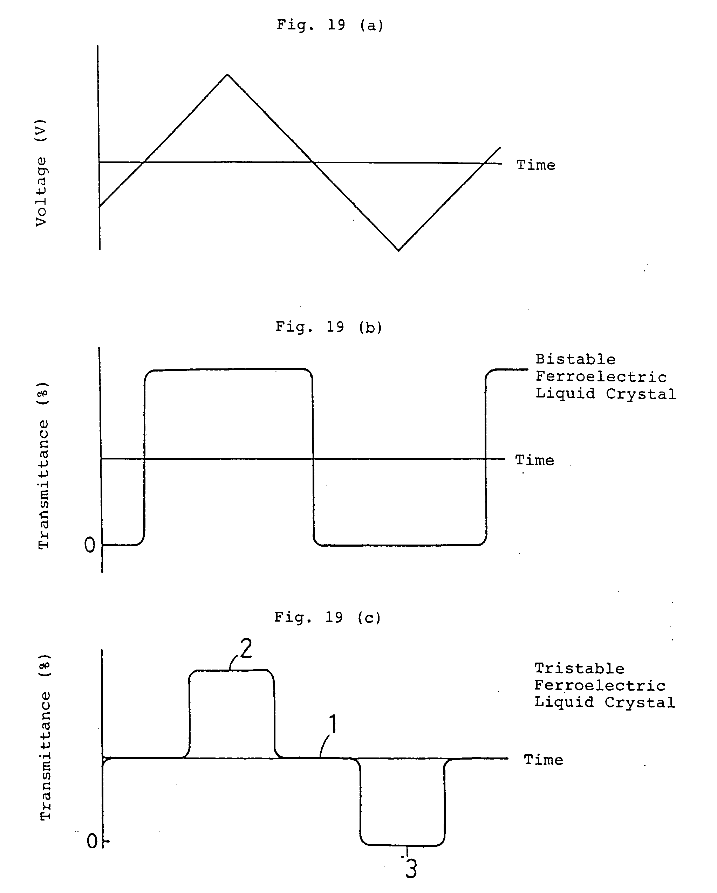

Ferroelectric liquid crystal elements now receiving the most extensive study are those having bistability as described, e.g., in JP-B-63-22287 (the term "JP-B" as used herein means an "unexamined published Japanese patent application") and U.S. Patent 4,367,924. Known bistable liquid crystals include those exhibiting an optically active chiral smectic C phase (SmC*) or H phase (SmH*). These liquid crystals form a specific spiral structure in a bulk state. When such liquid crystals are supported between substrates placed at a short distance enough to control the spiral structure, the liquid crystals exhibit two optically stable states when an electric field is applied. Namely, the liquid crystals are orientated in a first optically stable state when an electric field is applied in one direction, and in a second optically stable state when an electric field of an opposite direction is applied. Accordingly, the liquid crystals can be switched between two optically stable states depending on the direction of the applied electric field. Besides, the switching time is extremely shorter than that required in TN mode liquid crystal elements, and the respective stable state can be maintained even on removal of the electric field. Fig. 19-(b) shows changes of optical transmission of display element using the bistable liquid crystal when a triangular wave electric field is applied as shown in Fig. 19-(a).

On the other hand, ferroelectric liquid crystals taking three optically stable states (hereinafter referred to as tristable liquid crystals) have recently been proposed and attracting attention for their superior optoelectronic effects. The tristable liquid crystals are orientated in a first optically stable state with no electric field applied, in a second optically stable with an electric field applied in one direction, and in a third optically stable state with an electric field applied in the opposite direction, that is, they are switched among three stable states at a high speed depending on the direction and strength of an electric field applied. Further, the change of optical transmission among the three stable states with the change of applied voltage shows hysteresis on the voltage axis. For example, when an applied voltage is increased to switch the first stable state to the second stable state, the voltage at which the optical transmission is changed differs from that when an applied voltage is decreased to switch the second stable state to the first stable state. With this hysteresis effect, it is expected to realize a matrix type liquid crystal display making a highly precise and high contrast display. Fig. 19-(c) illustrates changes of optical transmission with changes of a triangular wave electric field applied as shown in Fig. 19-(a), where the ferroelectric liquid crystal shows a first stable state of molecular orientation as shown by numeral 1 of Fig. 19 (c) with no electric field applied, a second stable state of molecular orientation as shown by numeral 2 of Fig. 19 (c) differing from the first stable state with an electric field applied to one direction, and a third stable state of molecular orientation as shown by numeral 3 of Fig. 19 (c) differing from either of the first and second stable states with an electric field applied to another direction. With respect to the tristable ferroelectric liquid crystals, Fukuda, et al. reported the first optically stable state with no electric field applied "an antiferroelectric state" (refer to A.D.L. Chandani, E. Gorecka, Y. Ouchi, H. Takezoe, and A. Fukuda, Jpn. J. Appl. Phys., Vol. 28, L. 1265 (1989)).

It is necessary that the tristable ferroelectric liquid crystal should have uniformly orientated molecules with no electric field applied and that the switching among three optically stable states effectively takes place before the element using the tristable ferroelectric liquid crystal can exhibit expected driving characteristics.

For instance, with no electric field applied, a domain in which the projected longer axes of liquid crystal molecules are aligned in one direction on the substrate surface and also at right angles with respect to the smectic layer plane should be formed, and where an electric field in one direction is increased or decreased, the change of optical transmission should have sufficient nonlinearity and hysteresis.

However, it is difficult to obtain such an orientation state over a wide area, and this difficulty has been a great bar to put the element using the tristable liquid crystal into practical application. Known methods for molecular orientation include a method of applying a magnetic field, a method of applying a shearing force, and a method of providing an orientation control film comprising a high-molecular-weight substance and rubbing the surface of the film in one direction. None of these conventional methods, however, is deemed to afford a satisfactory orientation state, and has been demanded to establish an effective orientation technique which would make the full use of the above-described characteristics.

## SUMMARY OF THE INVENTION

Accordingly, an object of this invention is to provide a ferroelectric liquid crystal element which can provide liquid crystal displays having a high rate of switching, a high pixel density, and a wide display area, optical shutters having a high shutter speed, and the like, in which the ferroelectric liquid crystal has an improved initial orientation state and exhibits uniform molecular orientation over a wide area so that the excellent characteristics thereof can be made full use of.

For the purpose of accomplishing the above object of this invention, the inventors have conducted extensive investigations and, as a result, found it effective to use a high polymer film having a specific structure as an orientation control film.

The present invention relates to a ferroelectric liquid crystal element comprising a pair of transparent electrode substrates with a ferroelectric liquid crystal, for example, a tristable ferroelectric liquid crystal, being sealed therebetween, in which each of said substrates has formed thereon an orientation control film on the side in contact with the liquid crystal, said orientation control film being a film comprising polyimide represented by formula (I):

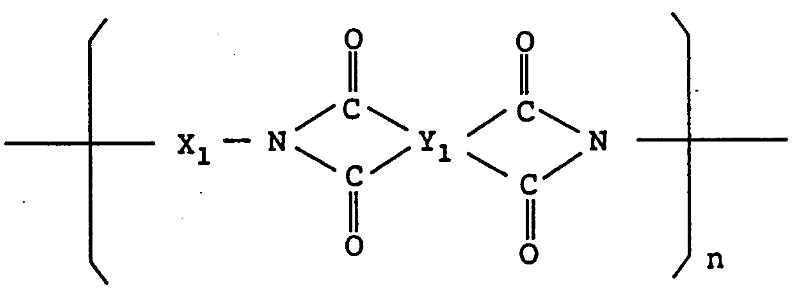

(I)

wherein $X_1$ represents a diamine residue (e.g.,

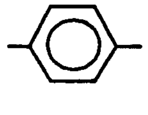
,
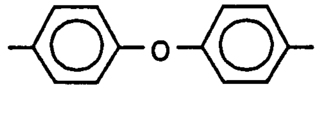
,

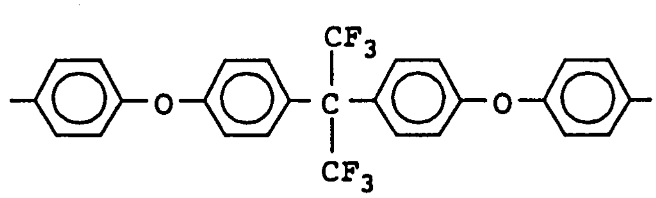
, or
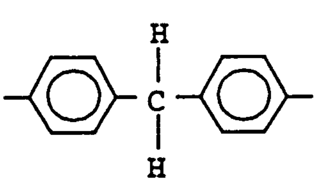
);

and $Y_1$ represents a tetracarboxylic acid residue (e.g.,

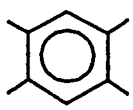 , 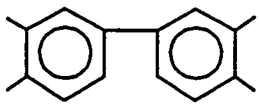 or 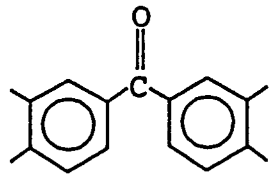 ),

a film comprising polyamide-imide represented by formula (II):

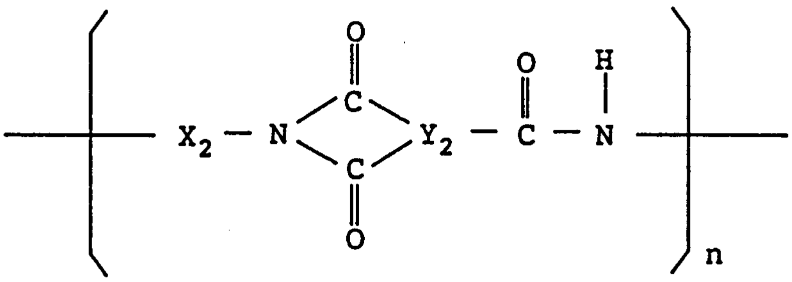 (II)

wherein $X_2$ represents a diamine residue (e.g.,

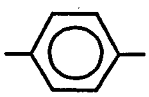 or 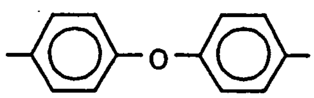 );

and $Y_2$ represents a trimellitic acid anhydride residue (e.g.,

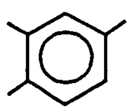 ),

or a film comprising polyamide represented by formula (III):

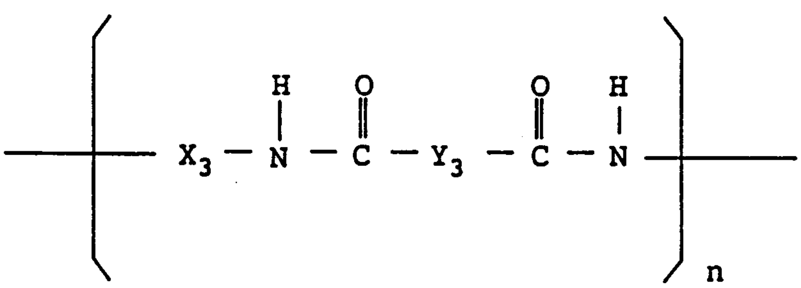 (III)

wherein $X_3$ represents the diamine residue

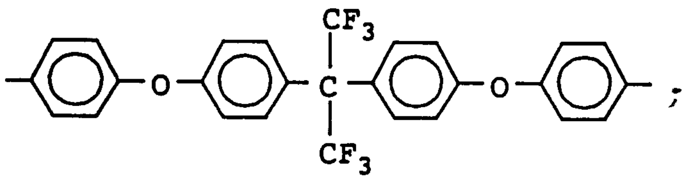

and $Y_3$ represents a dicarboxylic acid residue (e.g.,

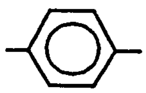 or 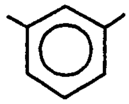 ).

## BRIEF DESCRIPTION OF THE DRAWINGS

Figure 1 illustrates a structure of the liquid crystal element according to the present invention.

Figures 2 through 10 each shows infrared absorption spectrum obtained in Examples of the present invention.

Figures 11-(a) through (c) each illustrates an orientation state of liquid crystals.

Figures 12 and 13 each is a graph of applied voltage vs. transmission in Examples of the present invention.

Figures 14 through 18 each shows infrared absorption spectrum obtained in Examples of the present invention.

Figure 19-(a) shows changes of voltage applied to liquid crystals, and Figures 19-(b) and (c) each shows changes of transmission with applied voltage of Fig. 19(a).

## DETAILED DESCRIPTION OF THE INVENTION

The present invention will be illustrated in greater detail with reference to Examples, but it should be understood that the present invention is not construed as being limited thereto.

## EXAMPLE 1

The whole structure of the liquid crystal element according to the present invention is illustrated in Fig. 1. In Fig. 1, the liquid crystal element is composed of a pair of electrode substrates (1) and (2) arrayed in parallel with a gap of, e.g., 2.2 µm, with ferroelectric liquid crystal (6) being sealed therebetween.

Electrode substrates (1) and (2) each is composed of transparent substrate (1c) or (2c) made of transparent glass or a transparent resin; transparent electrode (1a) or (2a) comprising a transparent conductive film made of indium oxide, tin oxide, etc., formed on the inner side of the respective transparent substrate; and orientation control film (1b) or (2b) comprising polyimide whose structural formula is shown in Table 1 (designated PI-1 to 9), formed on the inner side of the respective transparent electrode.

Ferroelectric liquid crystal (6) which can be used in the present invention preferably includes antiferroelectric liquid crystal materials exhibiting three optically stable states. Specific example of such an antiferroelectric liquid crystal material is a mixture of the following compounds (1), (2), and (3) in which * shows an optically active center.

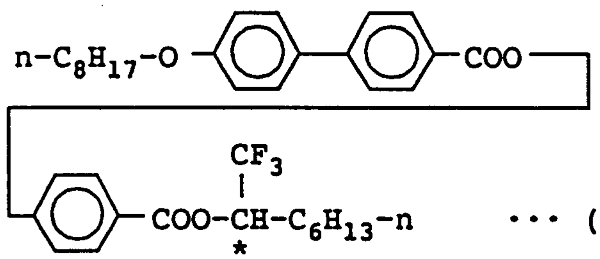

··· (1)

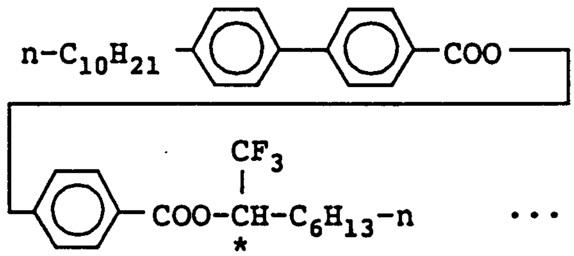

··· (2)

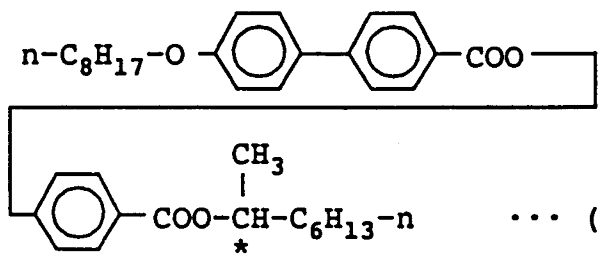

··· (3)

Phase transition of a mixture of compounds (1), (2), and (3) at a weight ratio of 15.5:69.0:15.5 was determined by means of a differential scanning calorimeter (DSC) and a polarizing microscope to obtain the following transition temperature phases.

$$\text{Cry} \overset{(-25°C)}{\sim} \text{SmC*} \xrightarrow{85°C} \text{SmA} \xrightarrow{90°C} \text{Iso}$$

wherein Cry means a crystal phase; SmC* means a chiral smectic C* phase (where three optically stable states are exhibited; sometimes referred to as SmCA*); SmA means a smectic A phase; and Iso means an isotropic liquid phase.

Ferroelectric liquid crystal compounds (1), (2), and (3) may also be used alone. Besides these compounds, any of ferroelectric liquid crystals exhibiting two or three optically stable states can be employed.

Transparent electrodes (1a) and (2a) are connected to external electrical power (3) and are capable of applying an electric field to ferroelectric liquid crystal (6). Electrode substrates (1) and (2) each has polarizer (4) or (5), respectively, on the outer side thereof.

A liquid crystal element having the above-described structure was prepared as follows.

Polyimide shown in Table 1 was synthesized by the following process and coated on substrate (1) or (2) to form orientation control film (1b) or (2b), respectively.

To 20 ml of dry dimethylacetamide was added 3 mmol of a diamine selected from 1,4-diaminobenzene (for the synthesis of PI-1 to 3), 4,4′-diaminodiphenyl ether (for the synthesis of PI-4 to 6), 2,2-bis[4-(4-aminophenoxy)phenyl]hexafluoropropane (for the synthesis of PI-7), and (4,4′-diamino)diphenylmethane (for the synthesis of PI-8 and 9), and the mixture was kept at 10 to 15 °C in a nitrogen atmosphere to form a

solution. To the solution was added 3 mmol of a carboxylic acid dianhydride selected from pyromellitic anhydride (for the synthesis of PI-1, 4, 7, and 8), 3,3′,4,4′-biphenyltetracarboxylic acid dianhydride (for the synthesis of PI-2, 5, and 9), and benzophenone-3,3′,4,4′-tetracarboxylic acid dianhydride (for the synthesis of PI-3 and 6) with stirring at 10 to 15 °C in a nitrogen atmosphere. The stirring was continued for about one additional hour at 10 to 15 °C and then for about another 1.5 hours at room temperature. The resulting viscous solution was allowed to stand overnight at room temperature.

Viscosity of each of these synthesized polyamidecarboxylic acids was measured in dimethylacetamide at a concentration of 0.5 g/dl by means of an Ubbelohde viscometer. The results obtained are tabulated in Table 1.

A dimethylacetamide solution of the resulting polyamidecarboxylic acid was coated on a glass plate, and the solvent was removed in hot air of 100 °C to form a film. The film was peeled off the glass plate, and an infrared absorption spectrum was determined with an infrared absorption spectrometer. The spectra corresponding to PI-1 to PI-9 are shown in Figs. 2 to 10, respectively. Each spectrum showed an absorption band characteristic of -CO- of an amido linkage at a wavelength of about 1650 $cm^{-1}$ and an absorption band characteristic of -NH- of an amido linkage at a wavelength of about 3300 $cm^{-1}$, whereby formation of a polyamidecarboxylic acid was confirmed.

Each of the resulting polyamidecarboxylic acids was coated on transparent electrode (1a) or (2a) provided on transparent substrate (1c) or (2c) by spin-coating to a film thickness of, e.g., 400 to 1000 Å and baked at 100 °C for 1 hour, at 200 °C for 1 hour, and then at 300 °C for 1 hour to conduct imidization. The surface of the resulting film was rubbed on one direction with nonwoven cloth made of nylon, polyester, etc. to obtain orientation control film (1b) or (2b).

Electrode substrates (1) and (2) having thereon orientation control film (1b) and (2b), respectively, were assembled into a cell with the orientation control membranes facing to each other in such a manner that the rubbing directions of the upper and lower orientation control films were in parallel or reverse parallel with each other, and the above-specified ferroelectric liquid crystal (6) was sealed between substrates (1) and (2). Sealing of the liquid crystal was carried out by heating the liquid crystal to convert it into an isotropic liquid (Iso phase), injecting the liquid into the cell by capillary action or vacuum displacement, and then slowly cooling the liquid at a rate of 1 to 2 °C/min until the isotropic phase was transformed to chiral smectic C (SmC*) phase.

Through the above-described operation, the liquid crystal molecules, in the SmC* phase hereof, were aligned in such a manner that the longer axes of the molecules (20) projected on the electrode substrate were in parallel with rubbing direction (50), while smectic layer (10) were at right angles with rubbing direction (50) as shown in Fig. 11 (a).

In order to evaluate quantitatively the degree of the molecular alignment, an orientation contrast was determined as follows. An optical transmission of the element having a polyimide film whose structural formula was shown in Table 1 was measured by using a photomultiplier while rotating under crossed nicols of a polarizing microscope. An orientation contrast was obtained as a quotient obtained by dividing the maximum value of the measured transmissions by the minimum. The results obtained are tabulated in Table 1. The higher the orientation contrast value, the more satisfactory the orientation state.

For comparison, the same determination was made on an element using a commercially available polyimide orientation control film ("LQ-1800" produced by Hitachi Ltd.; an estimated structural formula thereof is shown in Table 1), and the results are also shown in Table 1. As is apparent from Table 1, the elements according to the present invention are superior to the comparative one in orientation contrast, indicating a satisfactory orientation state.

Further, polarizer (4) and (5) were set on the outer surface of electrode substrates (1) and (2), respectively, as shown in Fig. 1 in such a manner that the axis of polarization of polarizer (5) (P) was in parallel with rubbing direction (50) and that (A) of polarizer (5) was at right angles with rubbing direction (50) as shown in Fig. 11-(a). A triangular wave (1 Hz) was applied to the element from external electrical source (3), and voltage-transmission characteristics were determined.

With no voltage applied, the liquid crystal molecules had alignment of Fig. 11-(a), and linearly polarized light having been transmitted through polarizer (5) could not pass through polarizer (4), thus showing a shade state (off-state).

As the applied voltage was positively increased, the direction of spontaneous polarization (30) was directed along electric field direction (40) as shown in Fig. 11-(b). Namely, by referring to the plane view on the left-hand side of Fig. 11-(b), the direction of the electric field (40) was from the front side of the paper toward the back side of the paper. Referring to the cross-sectional view on the right-hand side of Fig. 11-(b), it was downward. The liquid crystal molecules turned along smectic cone (60) and were aligned at a deviation angle of $\theta$ from rubbing direction (50). As this time, the linearly polarized light having passed

through polarizer (5) had its plane of polarization rotated by the action of birefringence of the liquid crystal and thereby passed through polarizer (4) to exhibit a light state (on-state). When the voltage was decreased to the negative side, the liquid crystal molecules were aligned as shown in Fig. 11-(c) according to the electric field in the direction opposite to that of Fig. 11-(b) to show a light state, too.

The above-described behavior is shown in Fig. 12, taking the element using PI-1 as an orientation control film as an example, in which the voltage is plotted as abscissa, and the transmission as ordinate. On comparing with the plot of the comparative element using a commercially available polyimide orientation film (Fig. 13), it is apparent that the element of the present invention rapidly switches from a shade state to a light state when, for example, the voltage is increased from zero and exceeds a given level (nonlinearity). When the thus elevated voltage is then decreased, the light state is switched to a shade state. The difference between the voltage level causing the former switching and that causing the latter switching is obviously larger than the difference observed in the comparative element, indicating that the element of the present invention has improved nonlinearity and hysteresis.

A driving margin was calculated according to equation shown below. The results obtained are shown in Table 1.

$$\text{Driving Margin } M = \frac{Vth(10) - Vth(90)}{Vsat(90) - Vth(10)}$$

wherein Vth(10) means an increasing negative or positive voltage at which a transmission is 10%; Vsat(90) means an increasing negative or positive voltage at which a transmission is 90%; and Vth(90) means a decreasing negative or positive voltage at which a transmission is 90%.

Driving margin M is a parameter which offers a guide in driving the element of the present invention as a matrix display element. When $M \geqq 1$, a high contrast matrix display can be obtained. Also from the results of driving margin determination, the effect of the orientation control film according to the present invention is clearly demonstrated.

Table 1

| Polymer Code No. | Structural Formula (repeat unit) | Inherent Viscosity (30°C) | Orientation Contrast | Driving Margin |
|---|---|---|---|---|
| PI-1 | 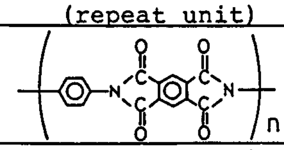 | 1.02dl/g | 61 | 2.1 |
| PI-2 | 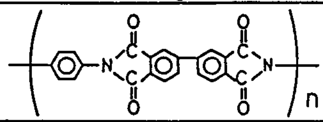 | 0.87dl/g | 41 | 2.4 |
| PI-3 | 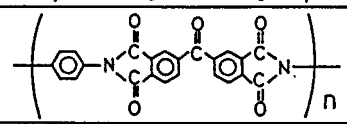 | 0.77dl/g | 32 | 2.4 |
| PI-4 | 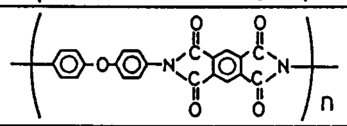 | 1.51dl/g | 35 | 4.0 |
| PI-5 | 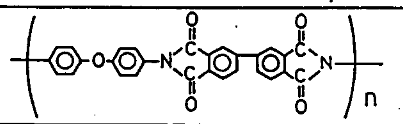 | 1.01dl/g | 35 | 2 2 |
| PI-6 | 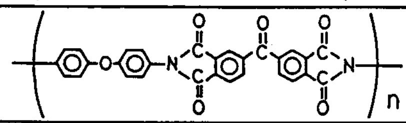 | 0.57dl/g | 28 | 1.3 |
| PI-7 | 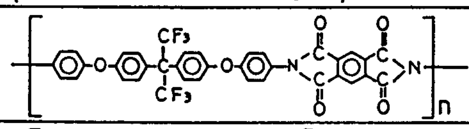 | 0.93dl/g | 13 | 0.21 |
| PI-8 | 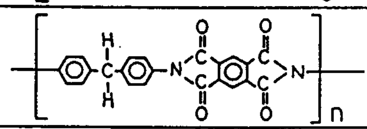 | 0.55dl/g | 86 | 0.95 |
| PI-9 | 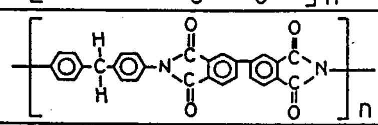 | 0.78dl/g | 61 | 1.08 |
| LQ-1800 for Comparison | 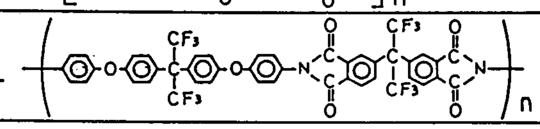 | 0.95dl/g | 11 | ≈0 |

EXAMPLE 2

A liquid crystal element was prepared in the same manner as in Example 1, except for using a polyamide-imide film having a structural formula shown in Table 2 as an orientation control film (1b) or (2b).

The polyamide imide film was prepared as follows. In 18.3 ml of dimethylacetamide were dissolved 5 mmol of a diamine selected from 1,4-diaminobenzene (for the synthesis of PI-10), 4,4'-diaminodiphenyl ether (for the synthesis of PI-11), and 2,2-bis[4-(4-aminophenoxy)phenyl]hexafluoropropane (for the synthesis of PI-12) and 5 mmol of triethylamine while cooling with ice-water. To the solution was added 5 mmol of solid trimellitic anhydride chloride all at once, and the mixture was stirred at room temperature in a nitrogen atmosphere. Ten milliliters of dimethylacetamide was added thereto to reduce the viscosity, and the reaction mixture was poured into 500 ml of methanol. The thus precipitated yellow flakes were collected, thoroughly washed with methanol, and vacuum dried at 100 °C. Inherent viscosity of the resulting polyamidecarboxylic acid was measured in the same manner as in Example 1 (30 °C, [C] = 0.5 g/dl in dimethylacetamide). The results obtained are tabulated in Table 2.

Infrared absorption spectra were also determined in the same manner as in Example 1 and shown in Fig. 14 (PI-10), Fig. 15 (PI-11), and Fig. 16 (PI-12).

The orientation contrast and driving margin of each of the resulting liquid crystal elements were determined in the same manner as in Example 1, and the results obtained are shown in Table 2. As is apparent from Table 2, PI-10 and PI-11 show more satisfactory results than PI-12.

Table 2

| Polymer Code No. | Structural Formula (repeat unit) | Inherent Viscosity (30°C) | Orientation Contrast | Driving Margin |
|---|---|---|---|---|
| PI-10 | 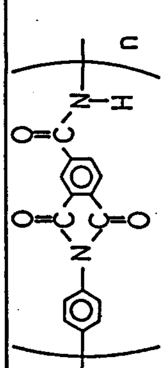 | 0.70 dl/g | 40 | 2.1 |
| PI-11 | 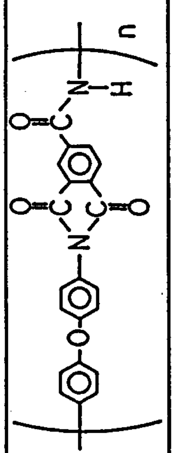 | 1.12 dl/g | 22 | 2.0 |
| PI-12 | 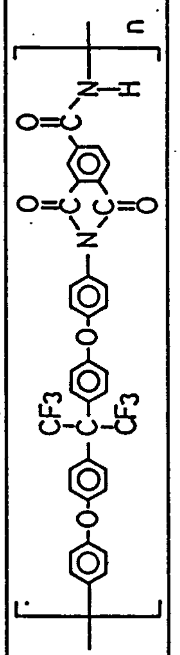 | 0.85 dl/g | 10 | 0.43 |

EXAMPLE 3

A liquid crystal element was prepared in the same manner as in Example 1, except for using a polyamide film having a structural formula shown in Table 3 as an orientation control film (1b) or (2b).

The polyamide film was prepared as follows. In 7.5 mmol of dimethylacetamide was dissolved 2.5 mmol of a diamine selected from 2,2-bis[4-(4-aminophenoxy) phenyl]-1,1,1,3,3,3-hexafluoropropane (for the synthesis of PI-13) and 1,4-diaminobenzene (for the synthesis of PI-14) under cooling with solid carbon dioxide. To the solution was added 2.5 mmol of a dicarboxylic acid chloride selected from terephthalic acid chloride (for the synthesis of PI-13) and isophthalic acid chloride (for the synthesis of PI-14) all at once, and the mixed solution was stirred at 4°C for 1.5 hours to synthesize polyamide. The resulting viscous solution was poured into 300 ml of methanol, and the thus precipitated polyamides were collected, thoroughly washed with methanol, and vacuum dried at 100°C.

Inherent viscosity of the resulting polyamide was measured in the same manner as in Example 1, and the results are tabulated in Table 3.

The infrared absorption spectrum of each polyamide was determined in the same manner as in Example 1, and the results are shown in Fig. 17 (PI-13) and Fig. 18 (PI-14).

Orientation contrast and driving margin of the resulting liquid crystal element were determined in the same manner as in Example 1, and the results obtained are also shown in Table 3. As can been from Table 3, satisfactory results were obtained similarly to Example 1.

Table 3

| Polymer Code No. | Structural Formula (repeat unit) | Inherent Viscosity (30°) | Orientation Contrast | Driving Margin |
|---|---|---|---|---|
| PI-13 | 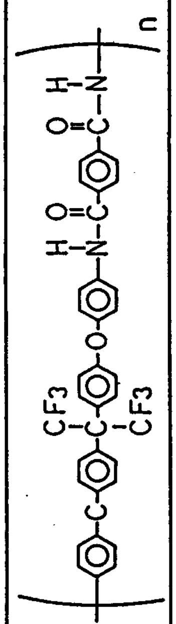 | 1.02 dℓ/g | 15 | 0.44 |
| PI-14 | 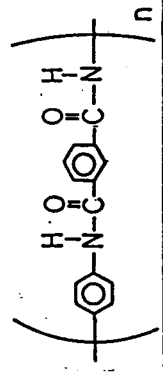 | 0.76 dℓ/g | 10 | 1.68 |

As described above, an initial orientation state of a ferroelectric liquid crystal can be improved by using an orientation control film having a specific structure according to the present invention, thereby making it possible to provide a liquid crystal element exhibiting a uniform molecular alignment over a wide range.

Since the excellent optoelectronic effects possessed by ferroelectric liquid crystals can be thus fully manifested, the element of the present invention exerts marked effects when applied as, for example, a

large area high precise display element, a TV image display element, or a liquid crystal optical shutter.

While the invention has been described in detail and with reference to specific embodiments thereof, it will be apparent to one skilled in the art that various changes and modifications can be made therein without departing from the spirit and scope thereof.

## Claims

1. A ferroelectric liquid crystal element comprising a pair of transparent electrode substrates with a ferroelectric liquid crystal, being sealed therebetween, in which each of said substrates has formed thereon an orientation control film on the side in contact with the liquid crystal, said orientation control film being a film comprising polyimide represented by formula (I):

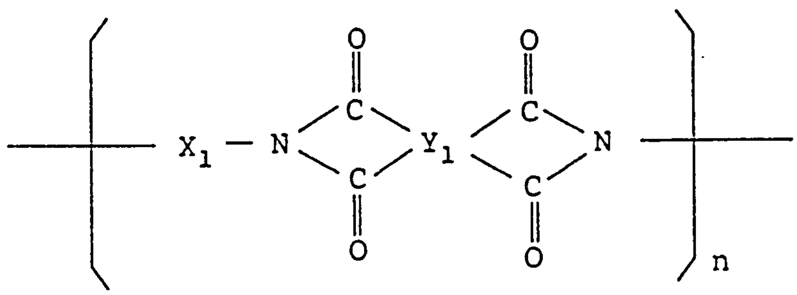
(I)

wherein $X_1$ represents a diamine residue selected from the group consisting of

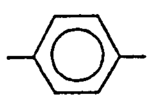 , 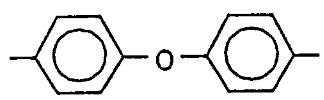 ,

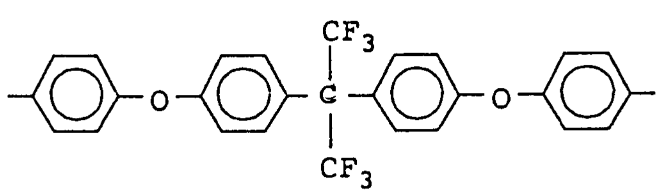 , or 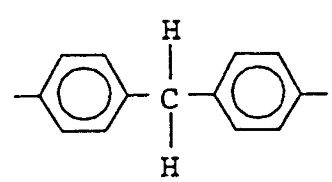 ;

and $Y_1$ represents a tetracarboxylic acid residue selected from the group consisting of

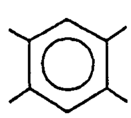 , 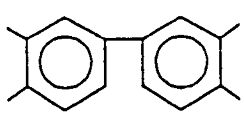 or 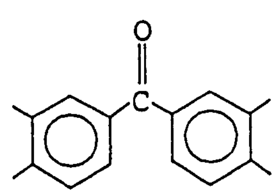 .

2. A ferroelectric liquid crystal as claimed in Claim 1, wherein said ferroelectric liquid crystal is a liquid crystal having three optically stable states.

3. A ferroelectric liquid crystal element comprising a pair of transparent electrode substrates with a ferroelectric liquid crystal, being sealed therebetween, in which each of said substrates has formed thereon an orientation control film on the side in contact with the liquid crystal, said orientation control film being a film comprising polyamide-imide represented by formula (II):

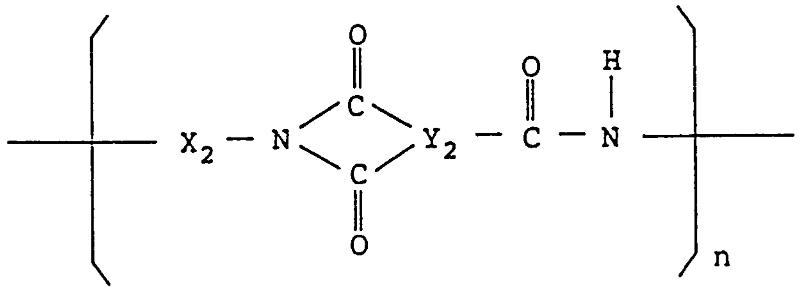

(II)

wherein $X_2$ represents a diamine residue selected from the group consisting of

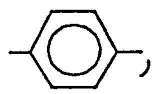,

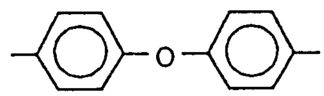, or

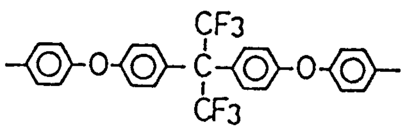;

and $Y_2$ represents a trimellitic acid anhydride residue,

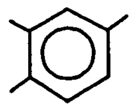.

4. A ferroelectric liquid crystal element as claimed in Claim 3, wherein said ferroelectric liquid crystal is a liquid crystal having three optically stable states.

5. A ferroelectric liquid crystal element comprising a pair of transparent electrode substrates with a ferroelectric liquid crystal, being sealed therebetween, in which each of said substrates has formed thereon an orientation control film on the side in contact with the liquid crystal, said orientation control film being a film comprising polyamide represented by formula (III):

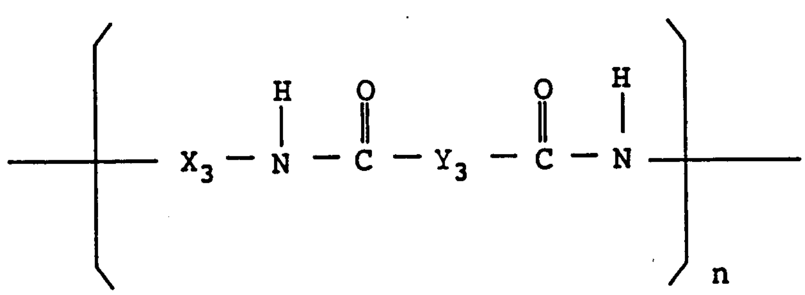

(III)

wherein $X_3$ represents the diamine residue

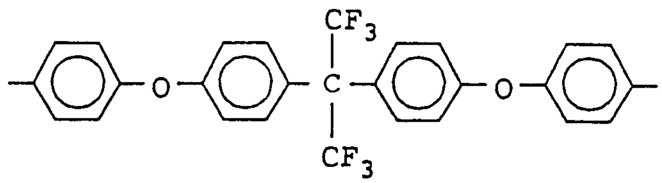 ;

and $Y_3$ represents a X dicarboxylic acid residue selected from the group consisting of

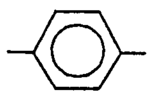 or 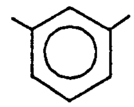 .

6. A ferroelectric liquid crystal element as claimed in Claim 5, wherein said ferroelectric liquid crystal is a liquid crystal having three optically stable states.

## Patentansprüche

1. Ferroelektrisches Flüssigkristallelement, umfassend ein Paar von durchsichtigen Elektrodensubstraten mit einem ferroelektrischen Flüssigkristall, der dicht dazwischen eingeschlossen ist, wobei jedes Substrat einen auf der Seite in Kontakt mit dem Flüssigkristall ausgebildeten Orientierungskontrollfilm aufweist, wobei es sich bei dem Orientierungskontrollfilm um einen Film handelt, der ein Polyimid umfaßt, das durch die Formel (I) wiedergegeben wird:

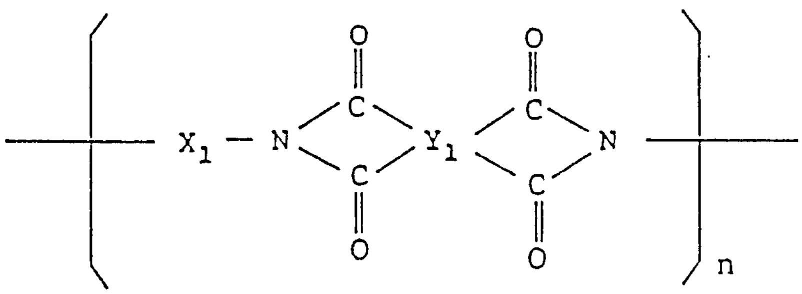 (I)

worin $X_1$ einen Diaminrest bedeutet, der aus der Gruppe

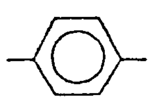 , 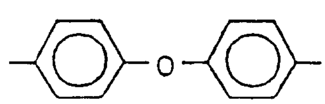 ,

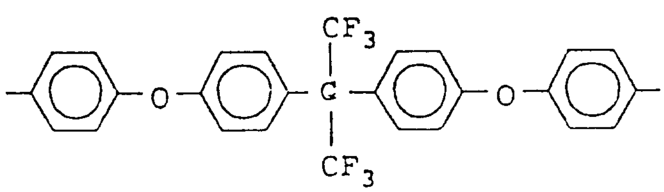 oder 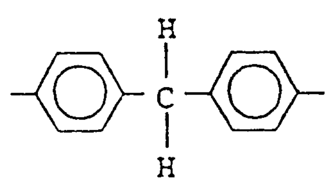

ausgewählt ist, und $Y_1$ einen Tetracarbonsäurerest bedeutet, der aus der Gruppe

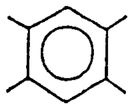 , 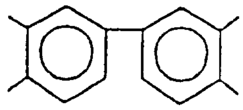 oder 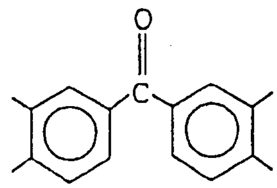

ausgewählt ist.

2. Ferroelektrisches Flüssigkristallelement nach Anspruch 1, wobei es sich bei dem ferroelektrischen Flüssigkristall um einen Flüssigkristall mit drei optisch stabilen Zuständen handelt.

3. Ferroelektrisches Flüssigkristallelement, umfassend ein Paar von durchsichtigen Elektrodensubstraten mit einem ferroelektrischen Flüssigkristall, der dicht dazwischen eingeschlossen ist, wobei jedes Substrat einen auf der Seite in Kontakt mit dem Flüssigkristall ausgebildeten Orientierungskontrollfilm aufweist, wobei es sich bei dem Orientierungskontrollfilm um einen Film handelt, der ein Polyamid-Imid umfaßt, das durch die Formel (II) wiedergegeben wird:

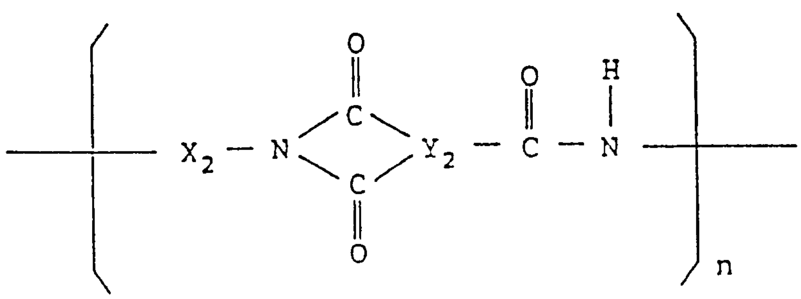 (II)

worin $X_2$ einen Diaminrest bedeutet, der aus der Gruppe

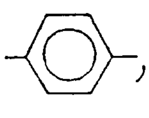 , 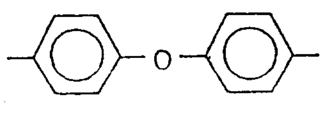 oder 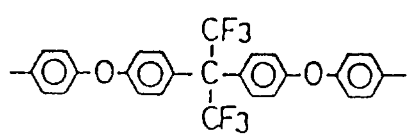

ausgewählt ist, und $Y_2$ einen Trimellitsäureanhydridrest

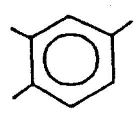

bedeutet.

4. Ferroelektrisches Flüssigkristallelement nach Anspruch 3, wobei es sich bei dem ferroelektrischen Flüssigkristall um einen Flüssigkristall mit drei optisch stabilen Zuständen handelt.

5. Ferroelektrisches Flüssigkristallelement, umfassend ein Paar von durchsichtigen Elektrodensubstraten mit einem ferroelektrischen Flüssigkristall, der dicht dazwischen eingeschlossen ist, wobei jedes Substrat einen auf der Seite in Kontakt mit dem Flüssigkristall ausgebildeten Orientierungskontrollfilm aufweist, wobei es sich bei dem Orientierungskontrollfilm um einen Film handelt, der ein Polyamid umfaßt, das durch die Formel (III) wiedergegeben wird:

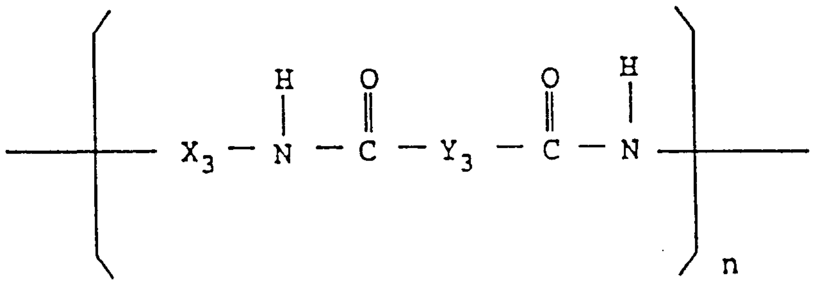 (III)

worin $X_3$ den Diaminrest

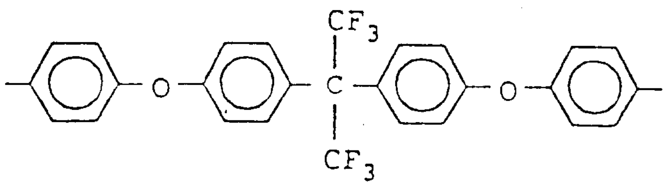

bedeutet und $Y_3$ einen Dicarbonsäurerest bedeutet, der aus der Gruppe

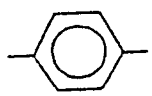 oder 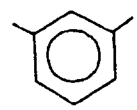

ausgewählt ist.

6. Ferroelektrisches Flüssigkristallelement nach Anspruch 5, wobei es sich bei dem ferroelektrischen Flüssigkristall um einen Flüssigkristall mit drei optisch stabilen Zuständen handelt.

**Revendications**

1. Elément à cristaux liquides ferroélectriques comprenant une paire de supports d'électrodes transparents avec des cristaux liquides ferroélectriques enfermés entre ces supports, dans lequel un film de commande d'orientation est formé sur chacun desdits supports du côté en contact avec les cristaux liquides, ledit film de commande d'orientation étant un film comprenant un polyimide représenté par la formule (I) :

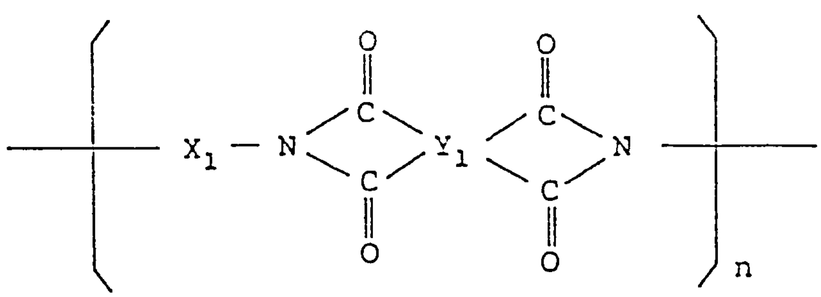 (I)

dans laquelle $X_1$ représente un résidu de diamine choisi parmi

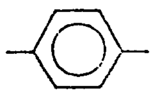 , 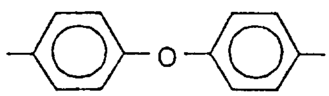 ,

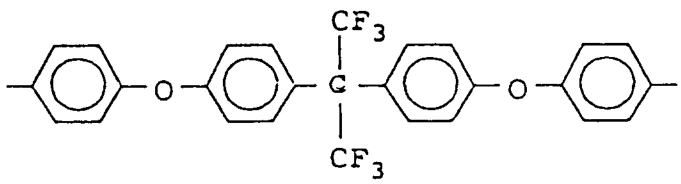 et 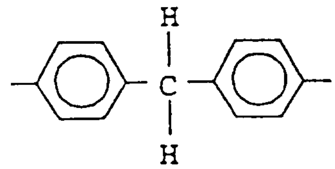 ;

et $Y_1$ représente un résidu d'acide tétracarboxylique choisi parmi

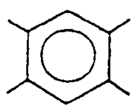 , 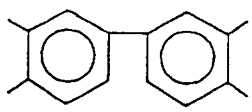 et 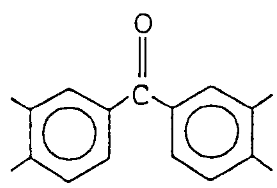 .

2. Elément à cristaux liquides ferroélectriques selon la revendication 1, dans lequel lesdits cristaux liquides ferroélectriques sont des cristaux liquides ayant trois états optiquement stables.

3. Elément à cristaux liquides ferroélectriques comprenant une paire de supports d'électrodes transparents avec des cristaux liquides ferroélectriques enfermés entre ces supports, dans lequel un film de commande d'orientation est formé sur chacun desdits supports du côté en contact avec les cristaux liquides, ledit film de commande d'orientation étant un film comprenant un polyamide-imide représenté par la formule (II) :

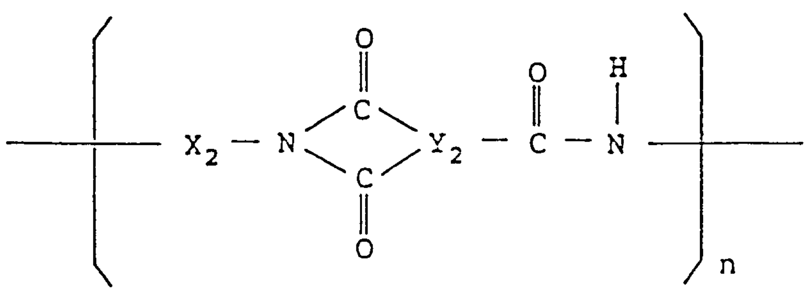 (II)

dans laquelle $X_2$ représente un résidu de diamine choisi parmi

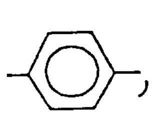, 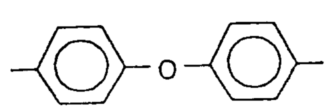 et

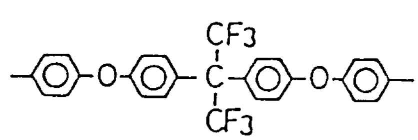 ;

et $Y_2$ représente un résidu d'anhydride d'acide trimellitique

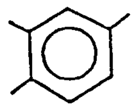 .

4. Elément à cristaux liquides ferroélectriques selon la revendication 3, dans lequel lesdits cristaux liquides ferroélectriques sont des cristaux liquides ayant trois états optiquement stables.

5. Elément à cristaux liquides ferroélectriques comprenant une paire de supports d'électrodes transparents avec des cristaux liquides ferroélectriques enfermés entre ces supports, dans lequel un film de commande d'orientation est formé sur chacun desdits supports du côté en contact avec les cristaux liquides, ledit film de commande d'orientation étant un film comprenant un polyamide représenté par la formule (III) :

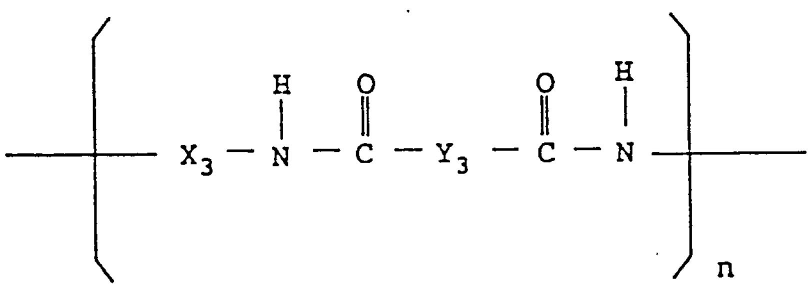 (III)

dans laquelle $X_3$ représente le résidu de diamine

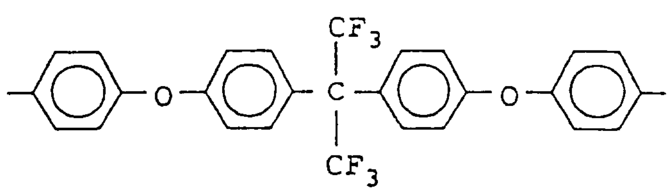 ; et

$Y_3$ représente X résidu d'acide dicarboxylique choisi parmi

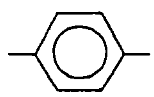 et 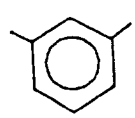 .

6. Elément à cristaux liquides ferroélectriques selon la revendication 5, dans lequel lesdits cristaux liquides ferroélectriques sont des cristaux liquides ayant trois états optiquement stables.

Fig. 1

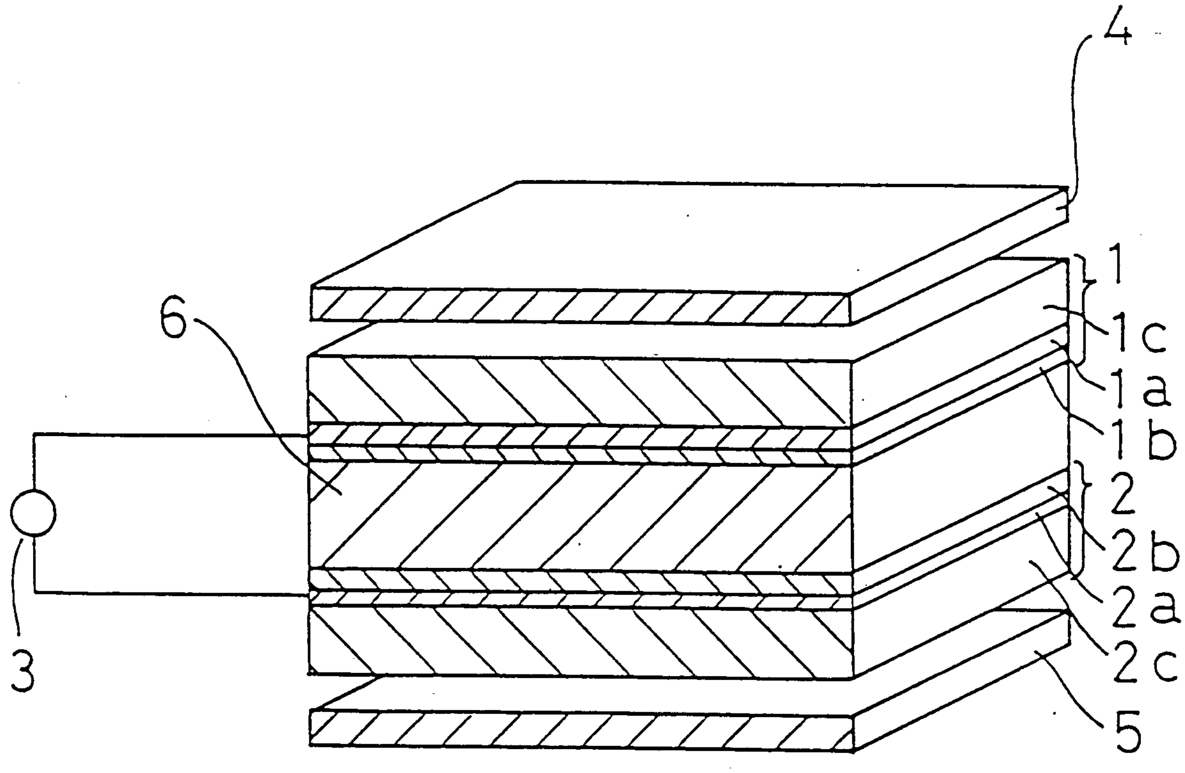

Fig. 2

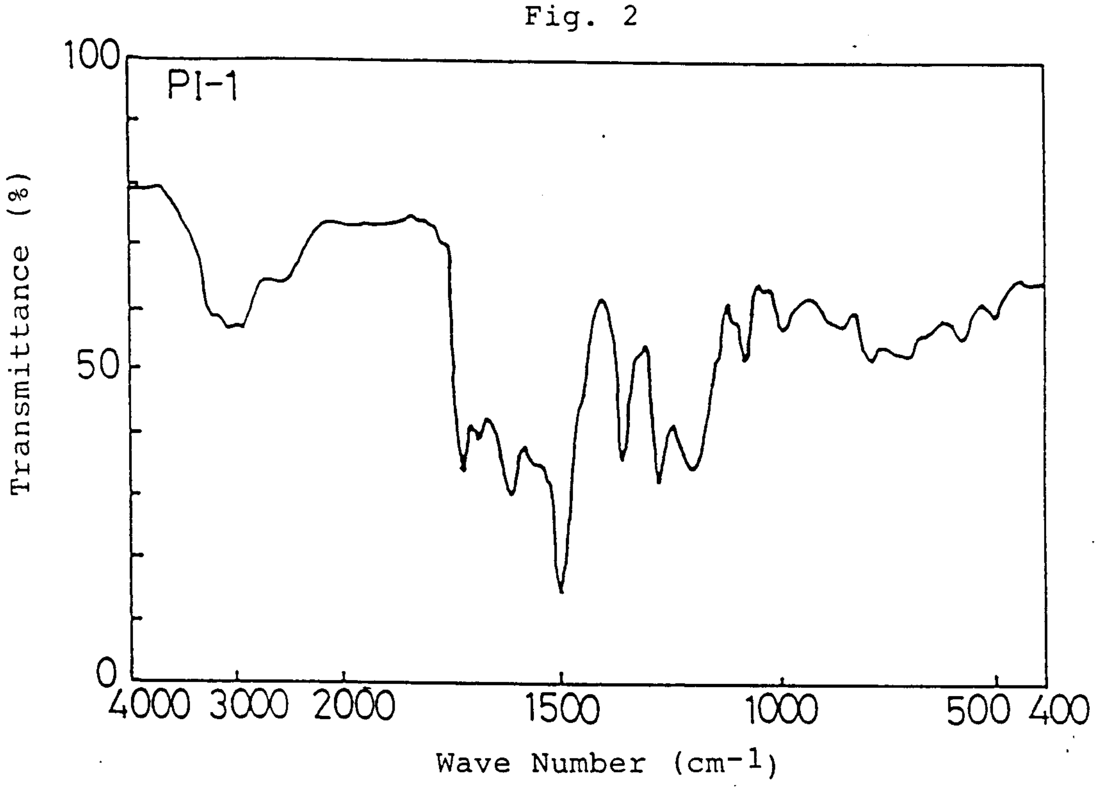
100
PI-1
50
0
Transmittance (%)
4000 3000 2000
1500
1000
500 400
Wave Number (cm-1)

Fig. 3

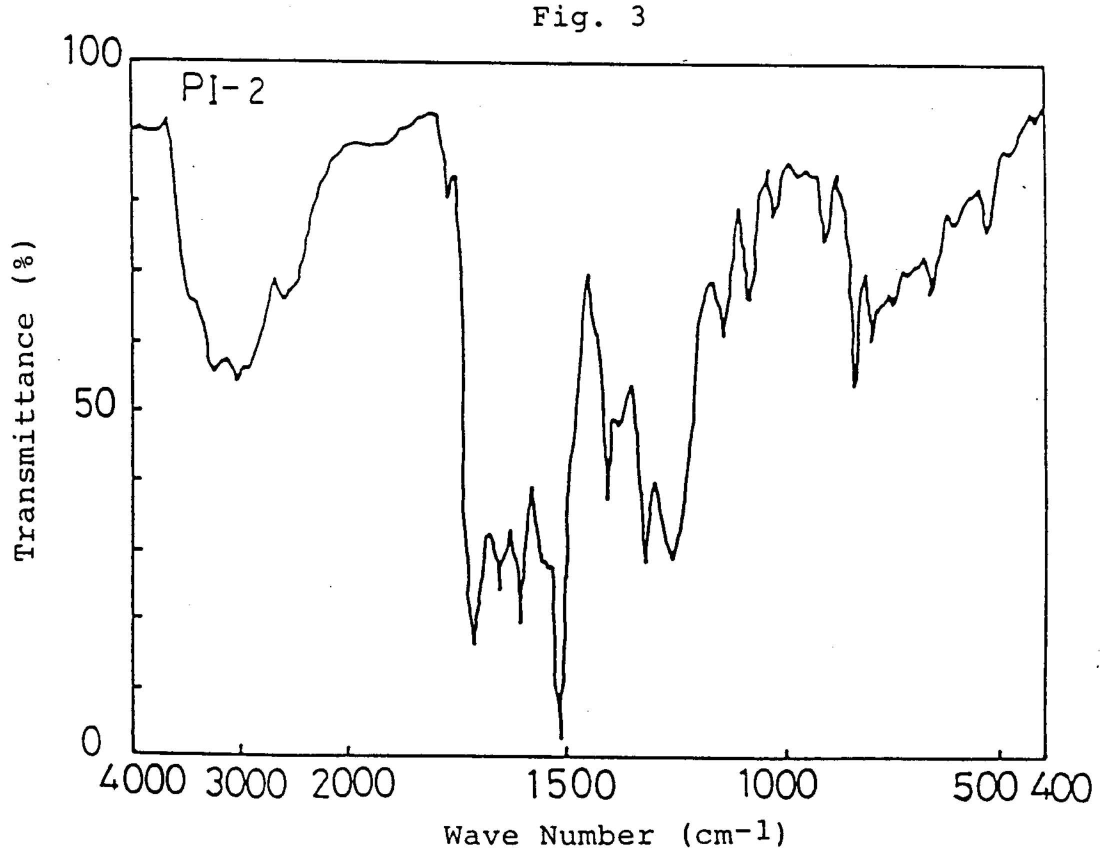
100
PI-2
50
0
Transmittance (%)
4000 3000 2000
1500
1000
500 400
Wave Number (cm-1)

Fig. 4

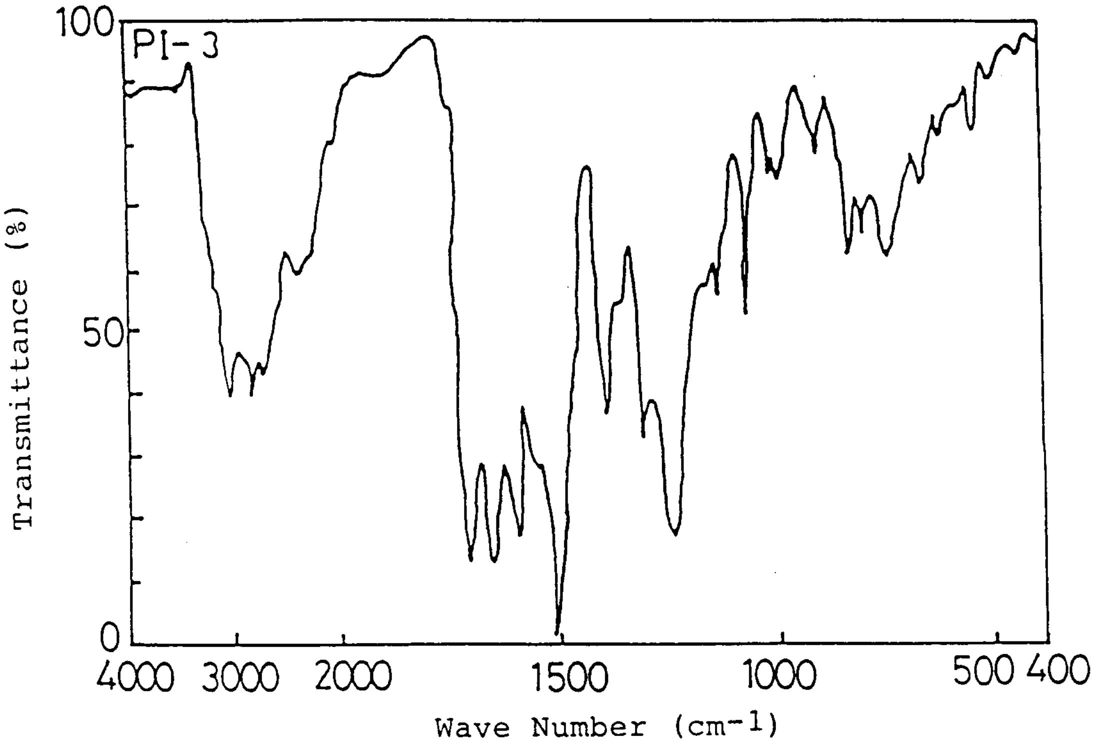
PI-3
100
50
0
Transmittance (%)
4000 3000 2000 1500 1000 500 400
Wave Number (cm-1)

Fig. 5

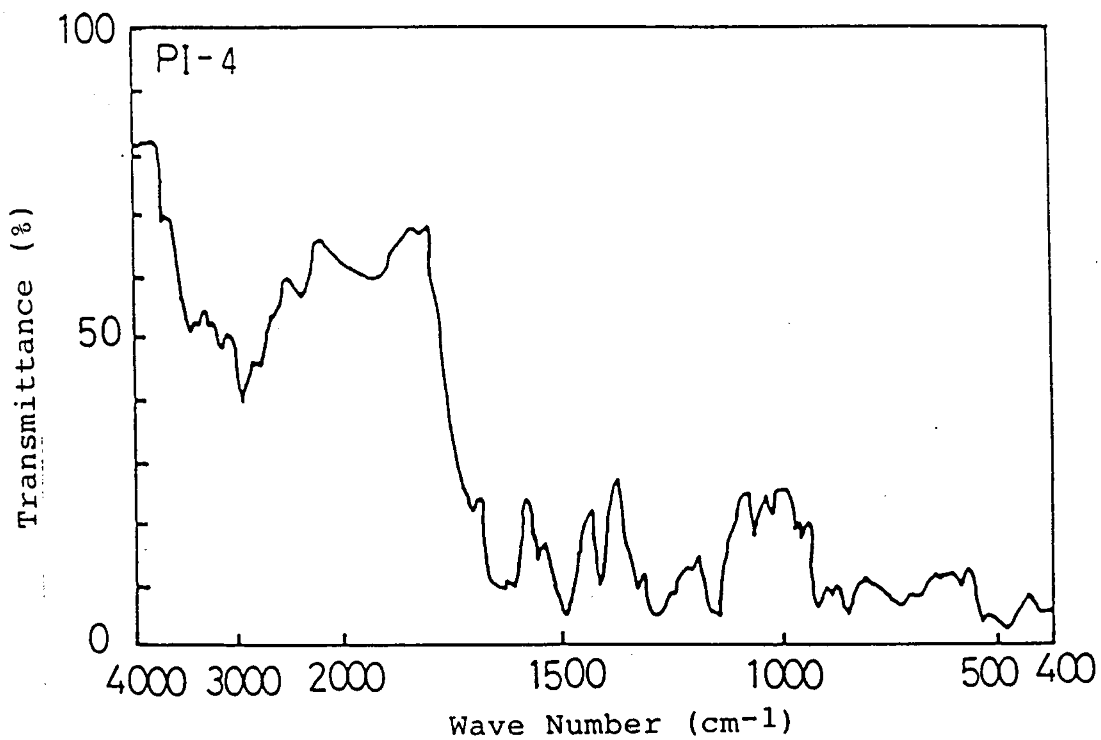
PI-4
100
50
0
Transmittance (%)
4000 3000 2000 1500 1000 500 400
Wave Number (cm-1)

Fig. 6

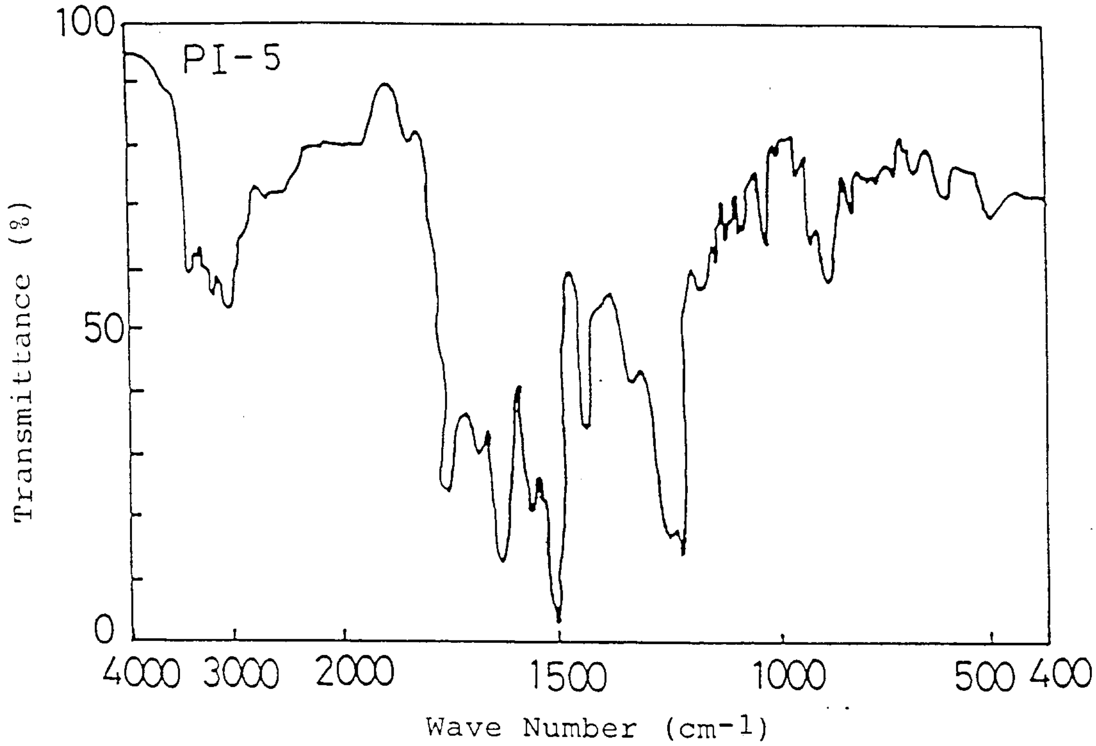
PI-5
100
50
0
Transmittance (%)
4000 3000 2000 1500 1000 500 400
Wave Number (cm-1)

Fig. 7

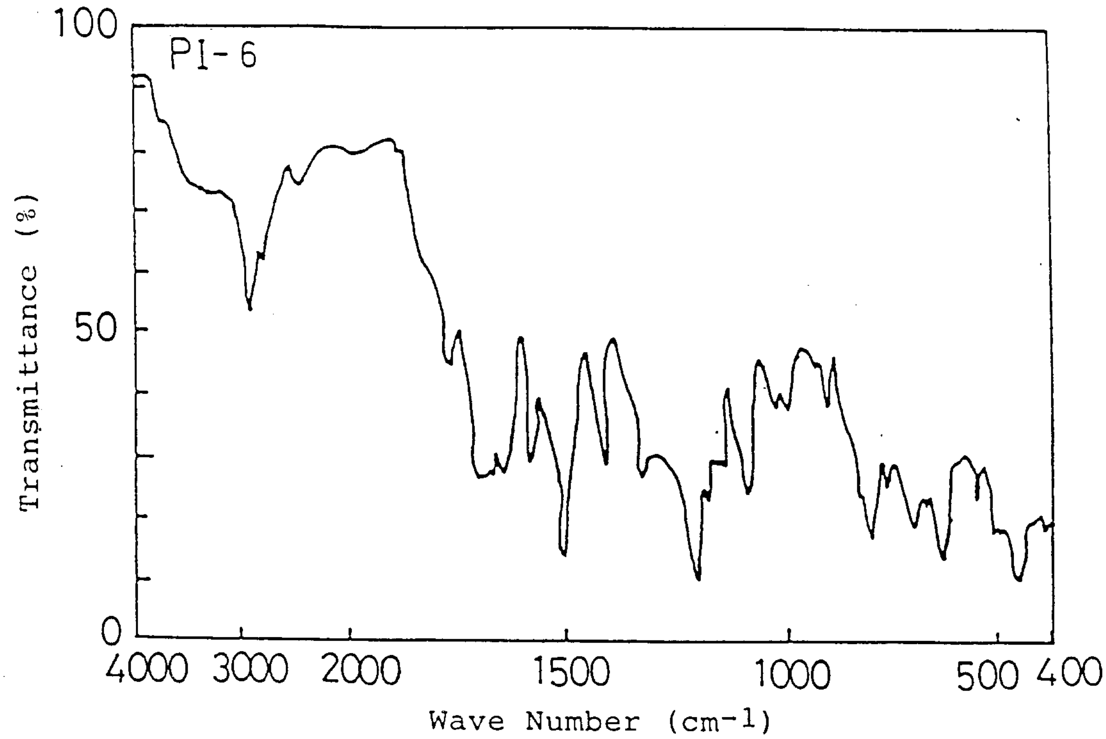
PI-6
100
50
0
Transmittance (%)
4000 3000 2000 1500 1000 500 400
Wave Number (cm-1)

Fig. 8

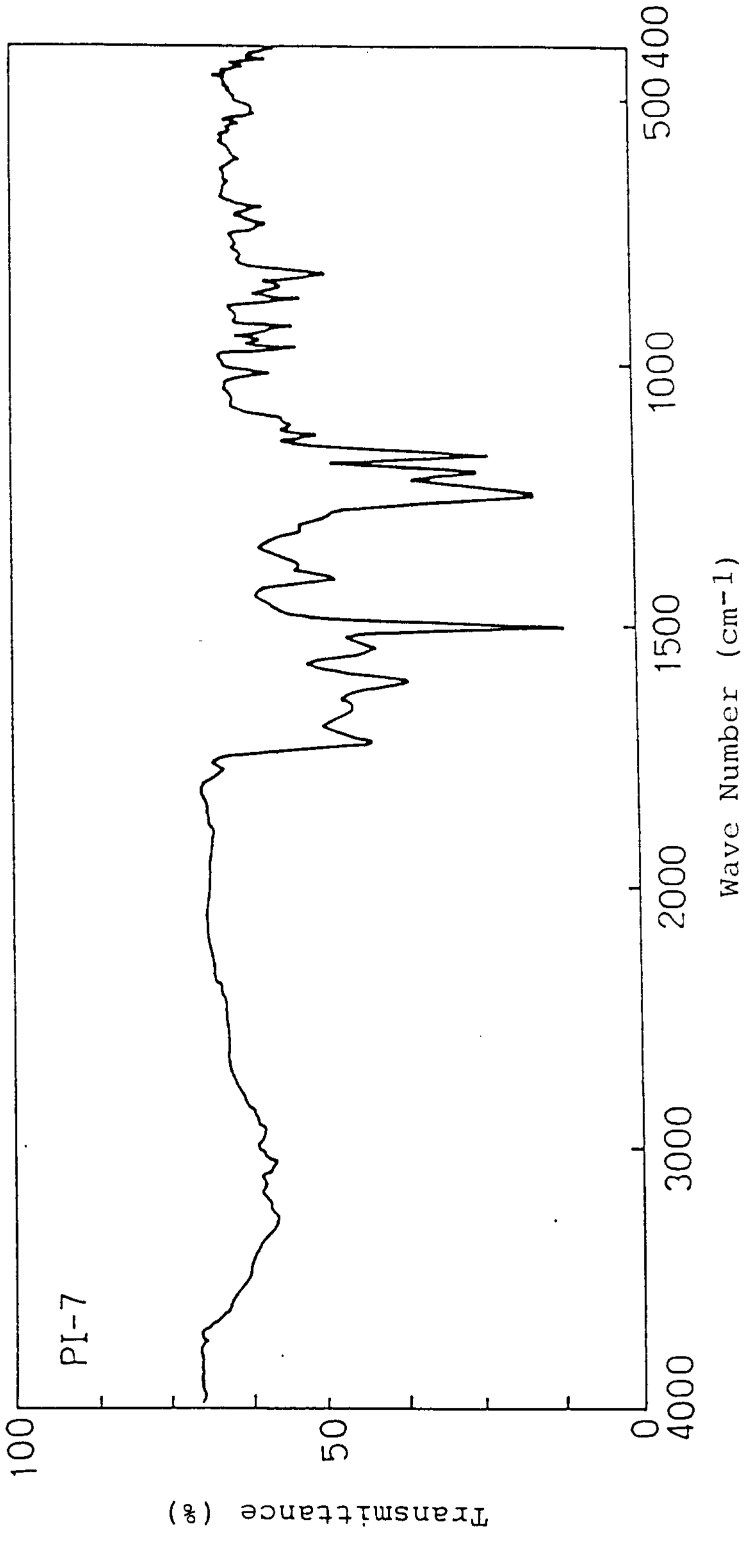
PI-7
Transmittance (%)
100
50
0
Wave Number (cm-1)
4000
3000
2000
1500
1000
500
400

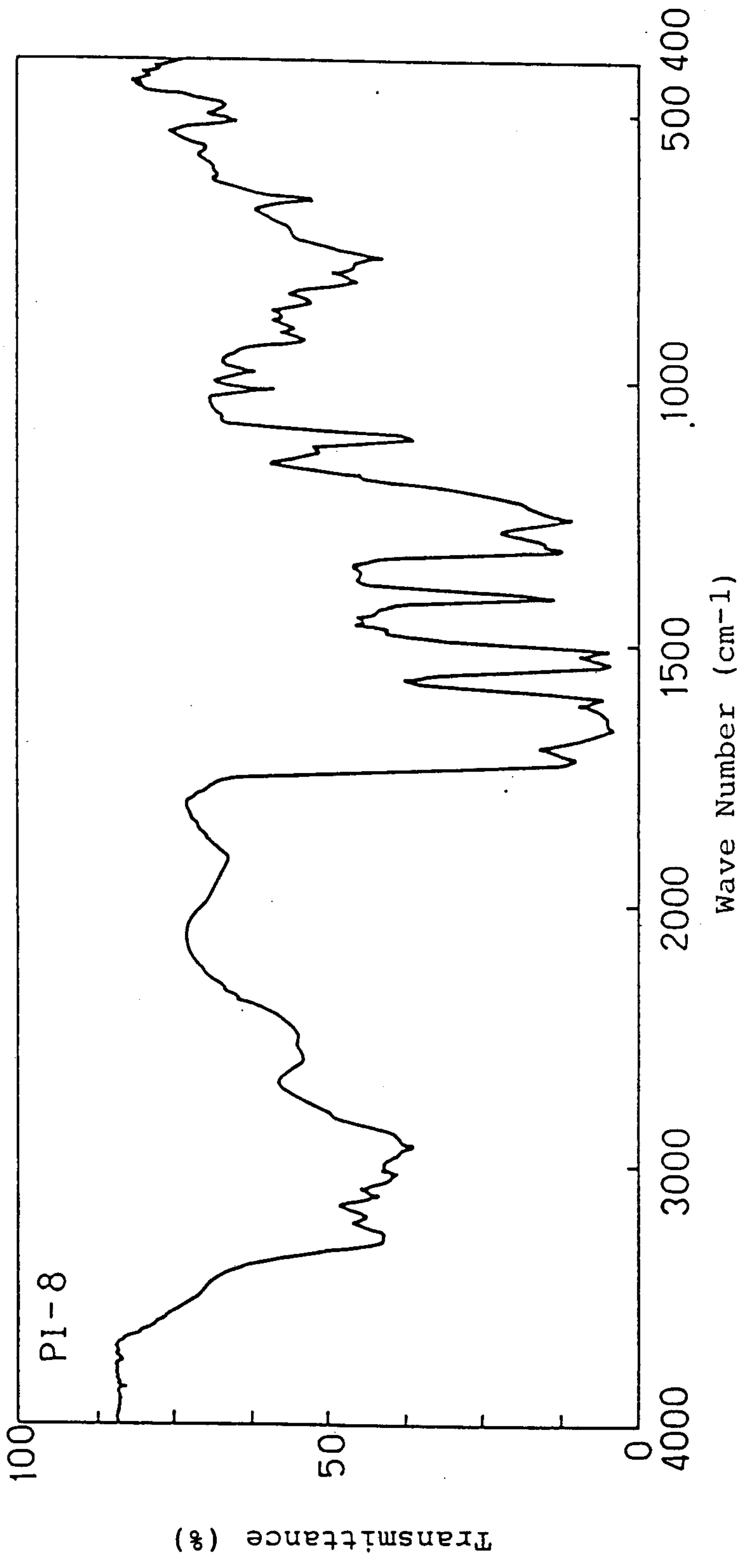
PI-8
Transmittance (%)
100
50
0
Wave Number (cm-1)
4000
3000
2000
1500
1000
500
400

Fig. 9

Fig. 10

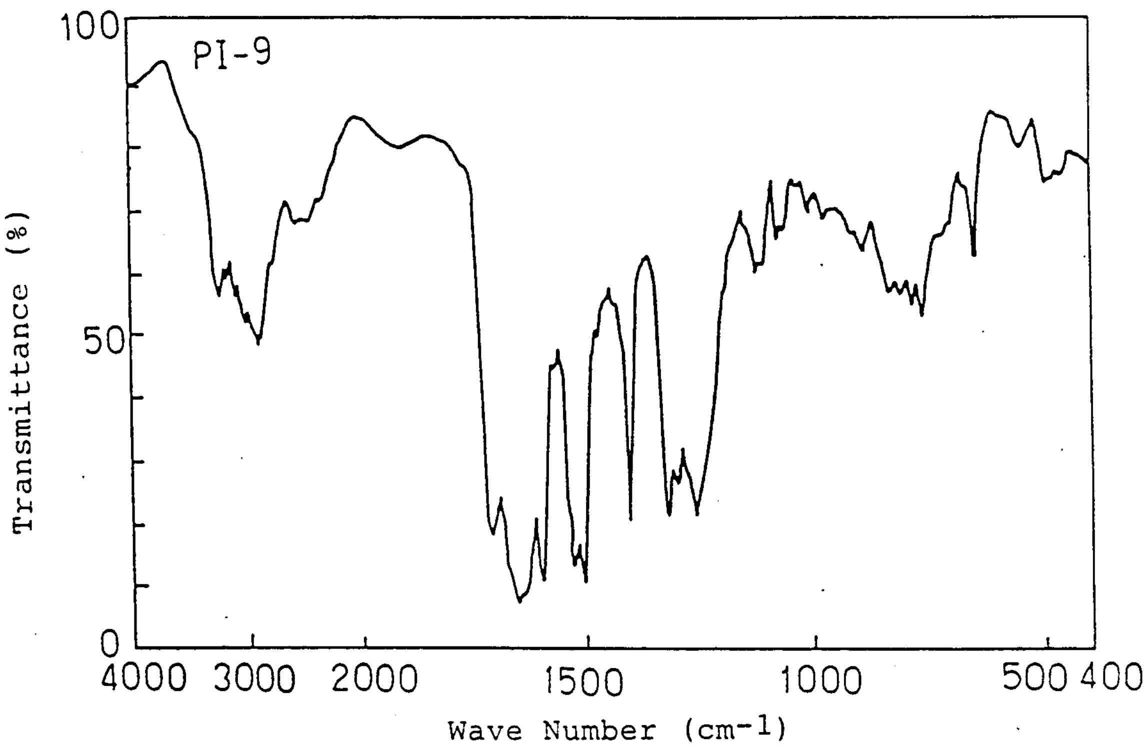
PI-9
Transmittance (%)
100
50
0
4000
3000
2000
1500
1000
500
400
Wave Number (cm-1)

Fig. 11 (a)

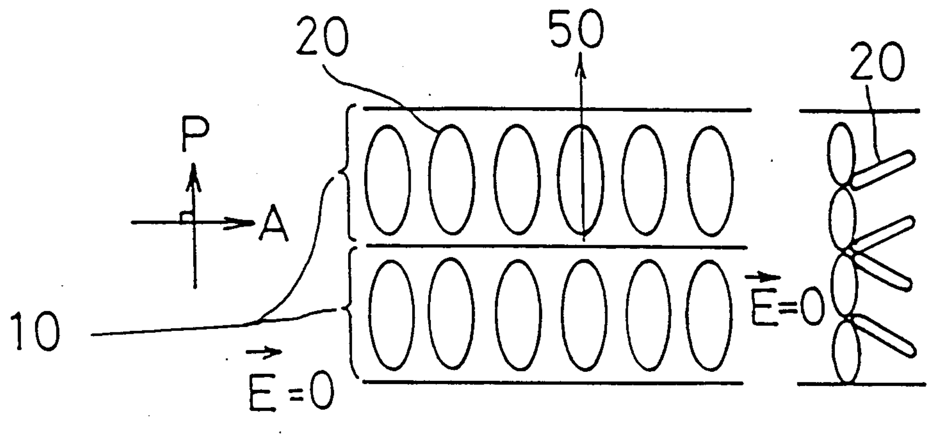


Fig. 11 (b)

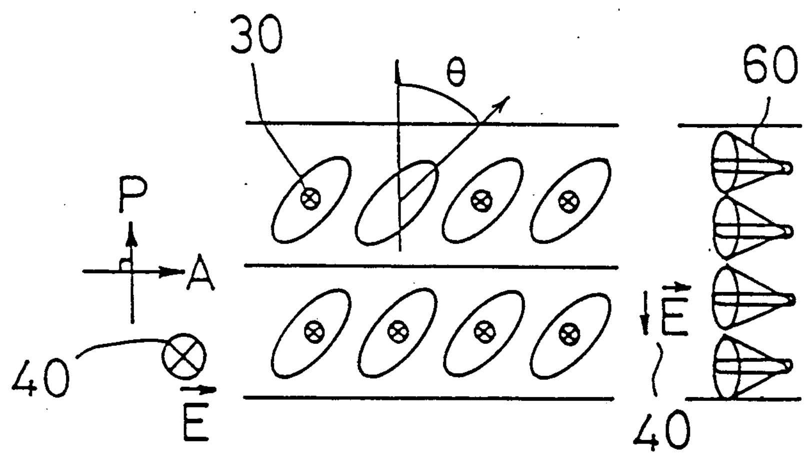


Fig. 11 (c)

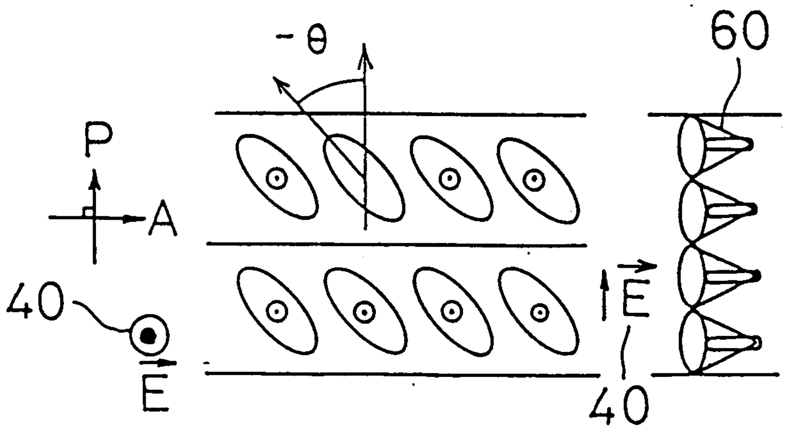

Fig. 12

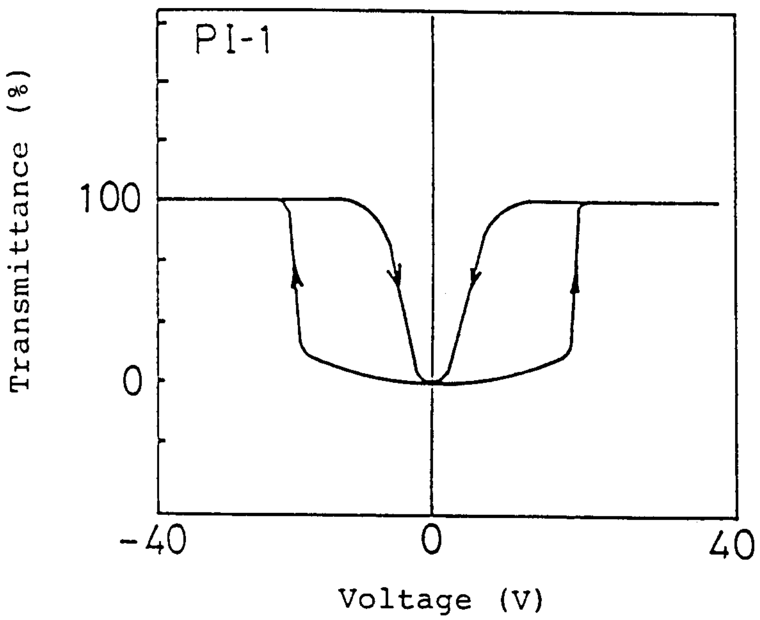
PI-1
Transmittance (%)
100
0
-40
0
40
Voltage (V)

Fig. 13

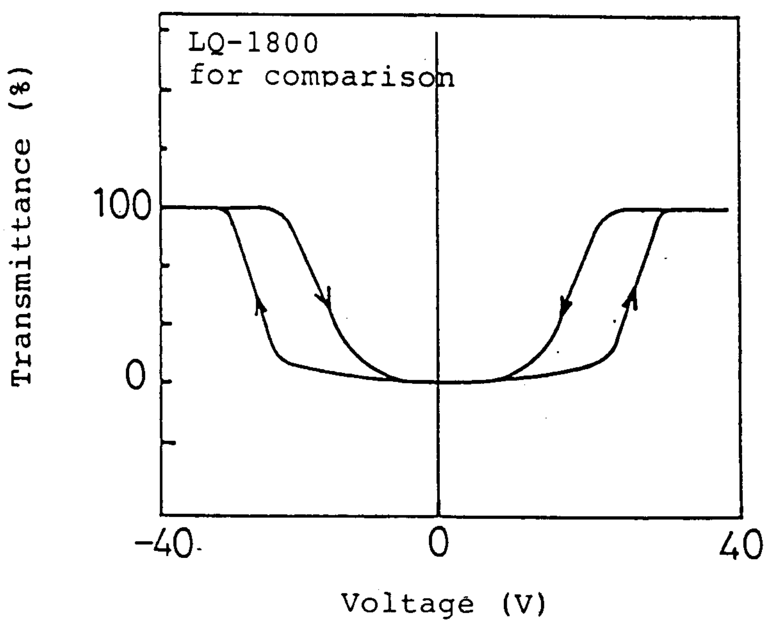
LQ-1800
for comparison
Transmittance (%)
100
0
-40
0
40
Voltage (V)

Fig. 14

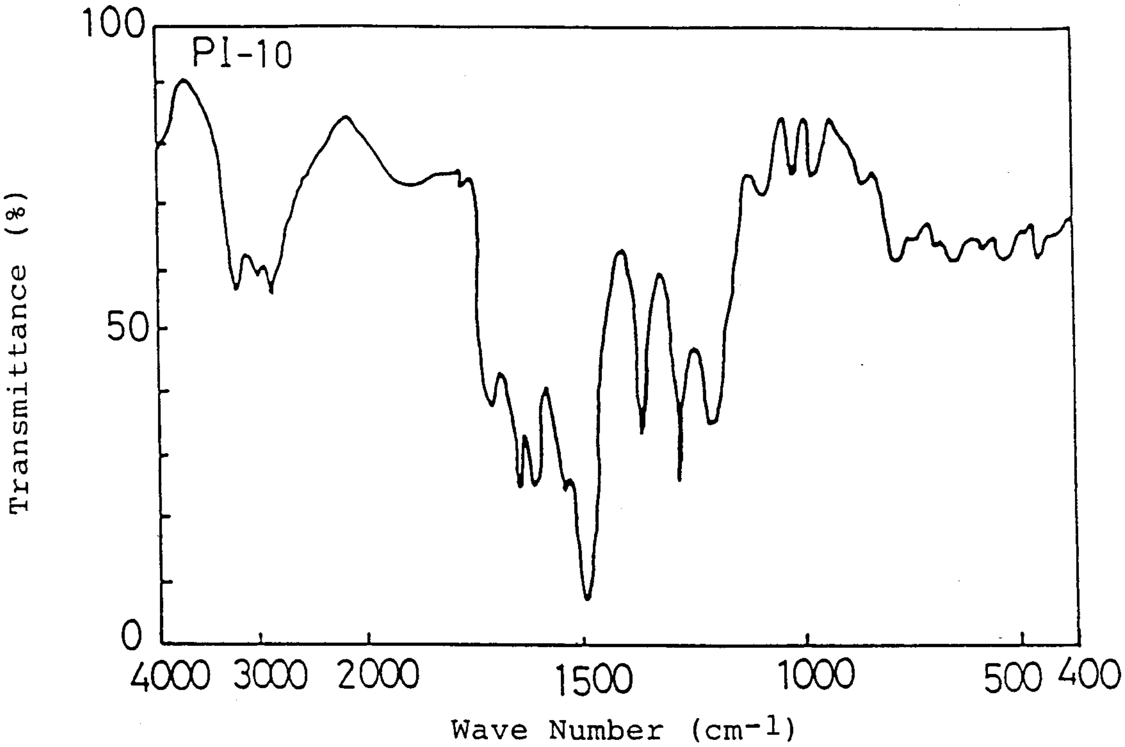
100
PI-10
Transmittance (%)
50
0
4000 3000 2000
1500
1000
500 400
Wave Number (cm-1)

Fig. 15

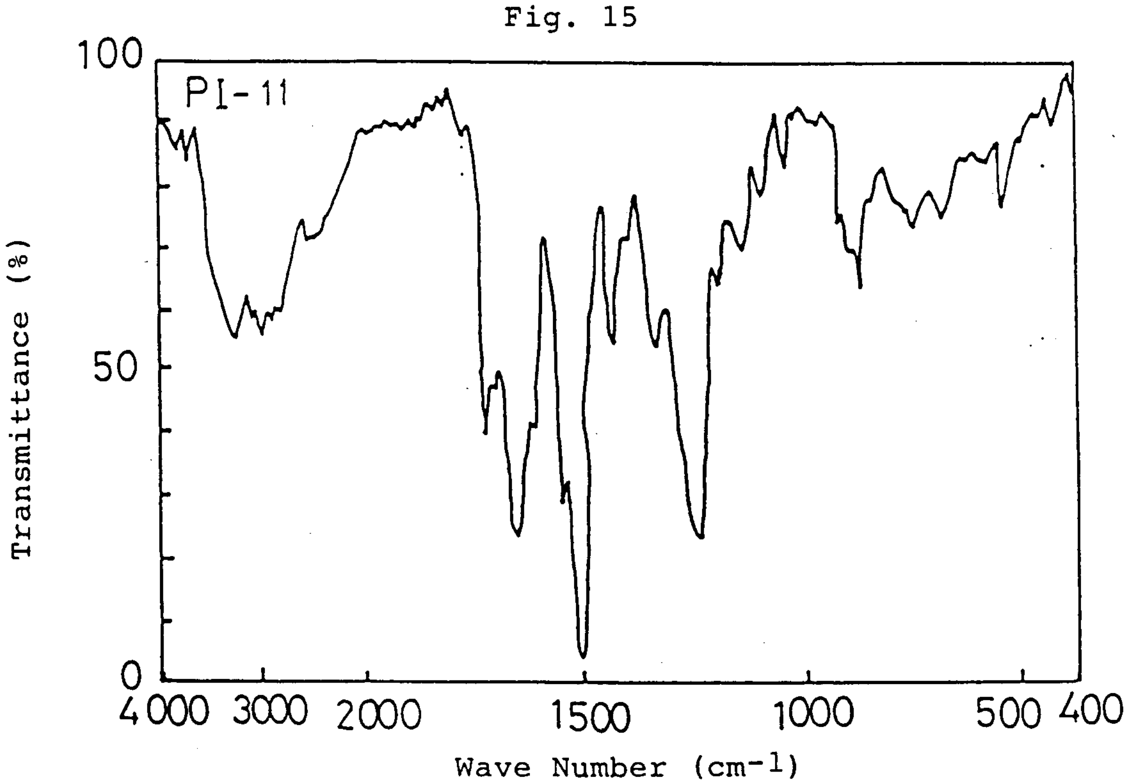
100
PI-11
Transmittance (%)
50
0
4000 3000 2000
1500
1000
500 400
Wave Number (cm-1)

Fig. 16

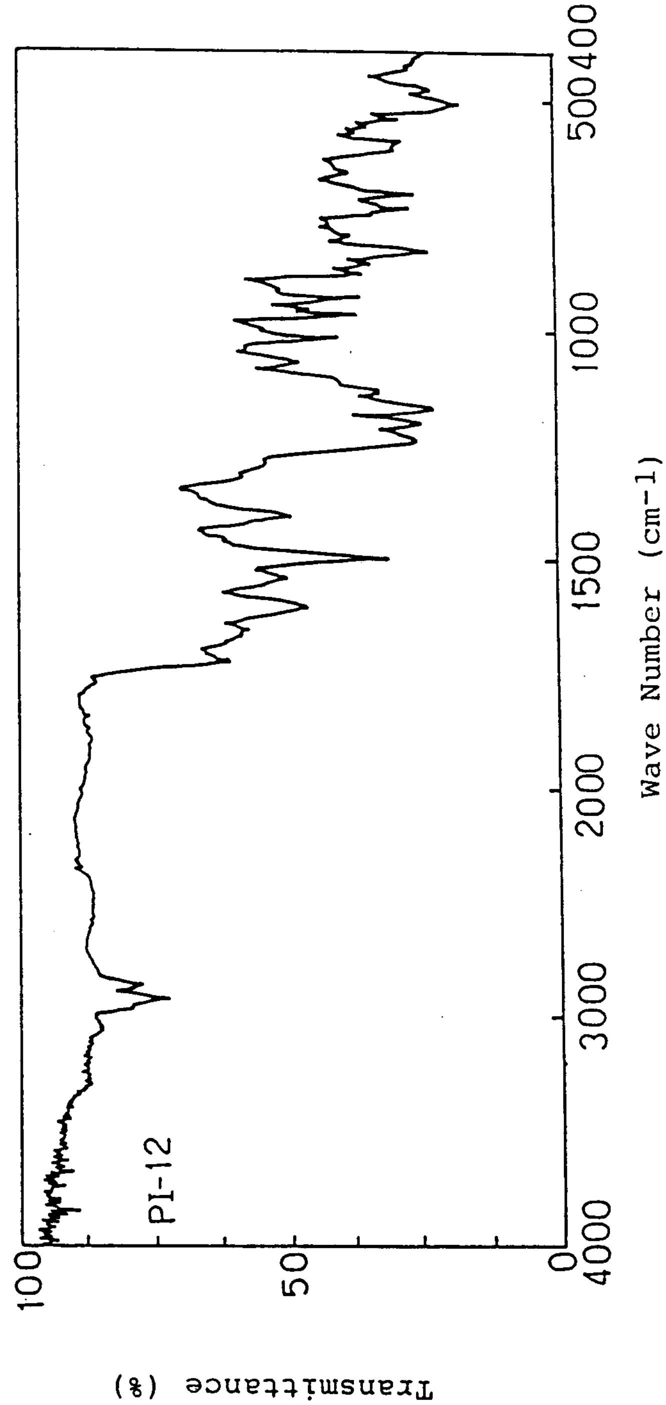
PI-12
Transmittance (%)
100
50
0
Wave Number (cm-1)
4000
3000
2000
1500
1000
500
400

Fig. 17

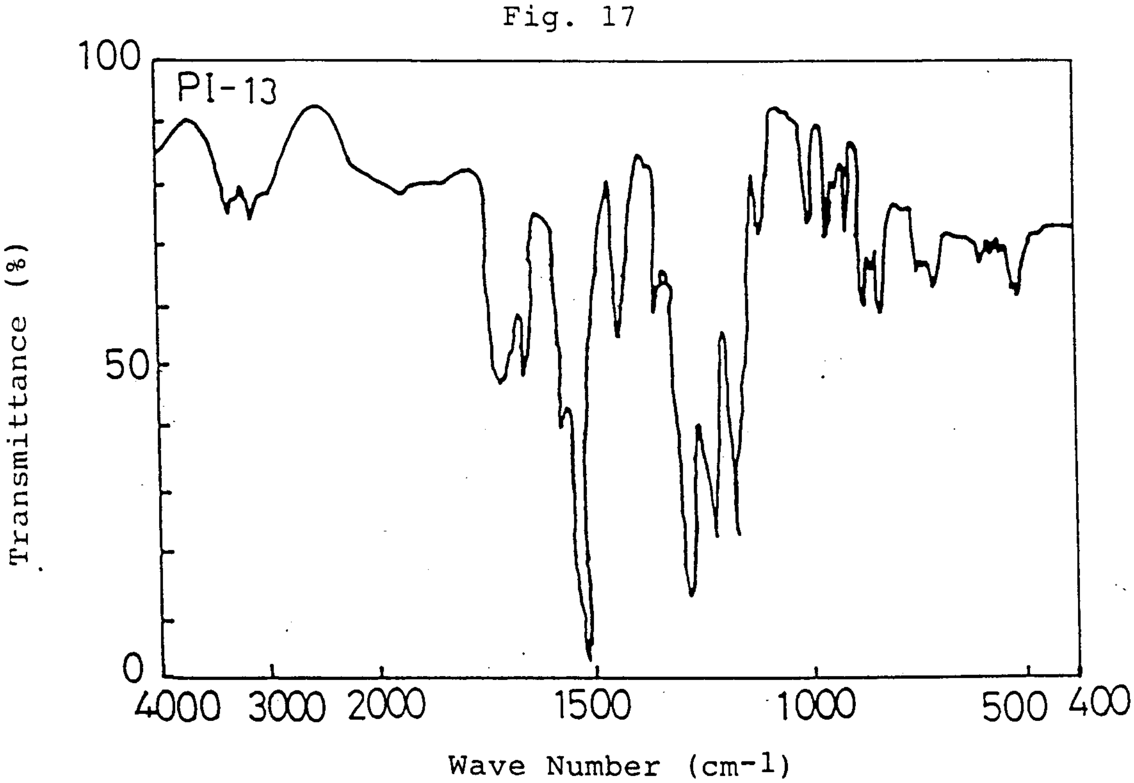
100
PI-13
50
0
Transmittance (%)
4000 3000 2000 1500 1000 500 400
Wave Number (cm-1)

Fig. 18

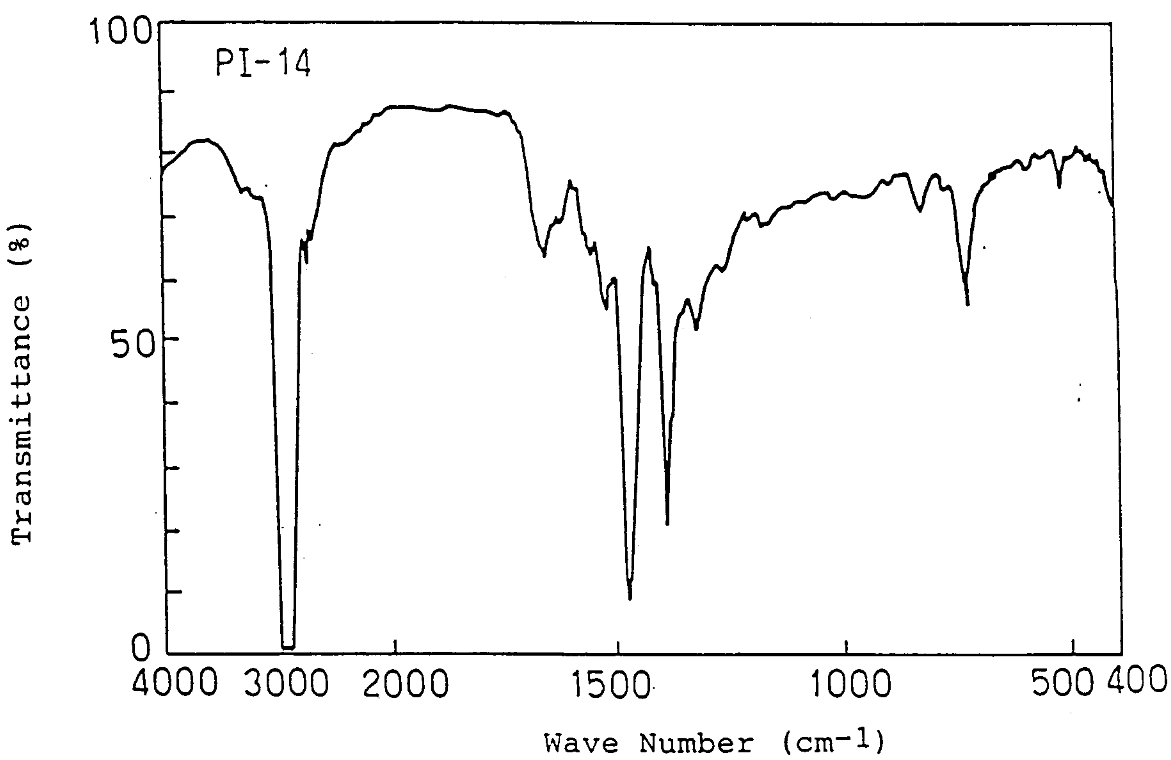
PI-14
Transmittance (%)
100
50
0
4000
3000
2000
1500
1000
500
400
Wave Number (cm-1)

Fig. 19 (a)

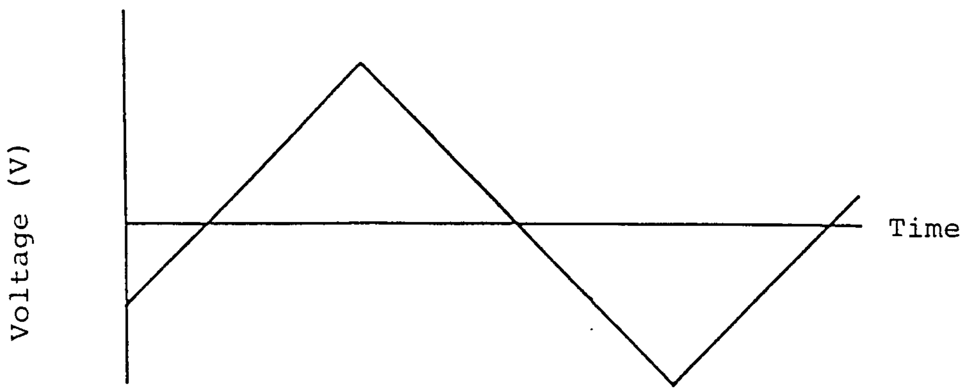


Fig. 19 (b)

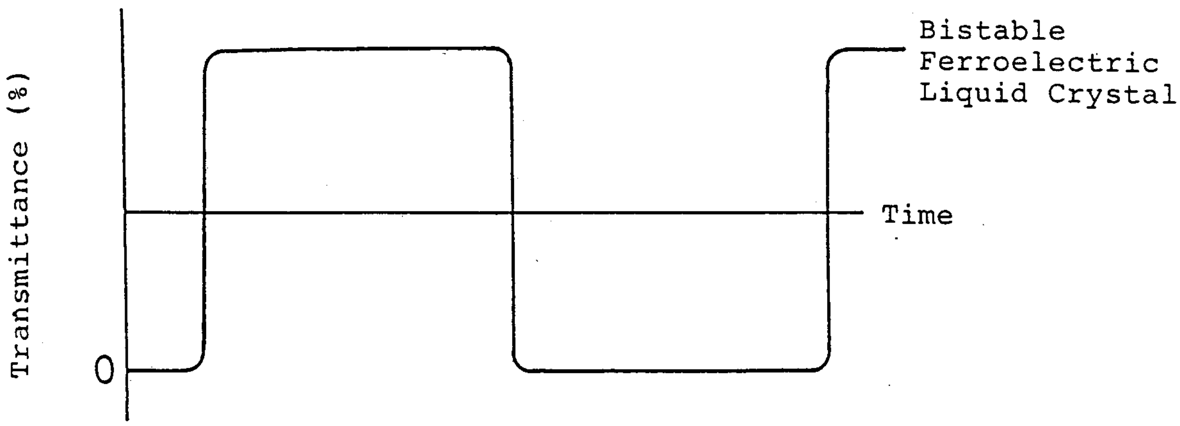


Fig. 19 (c)